# EUROPEAN PATENT SPECIFICATION

(11) **EP 4 189 296 B1**
(45) Date of publication and mention of the grant of the patent: **15.04.2026**
(21) Application number: 21748674.5
(22) Date of filing: 22.07.2021
(51) Int. Cl.: F24F 1/0011, F24F 1/0068, F24F 1/0071, F24F 1/0073, F24F 1/0076, F24F 1/0087, F24F 13/20, F24F 13/30, F24F 13/32, F24F 1/0057, F24F 12/00

(54) **FAN COIL UNIT**
LÜFTERSPULENEINHEIT
VENTILO-CONVECTEUR

(30) Priority: 31.07.2020 IT 202000018862
(43) Date of publication of application: 07.06.2023
(73) Proprietor: RM Sistemi S.r.l., 30030 Salzano (VE) (IT)
(72) Inventor: CIACCHI, Claudio, 30038 Spinea (VE) (IT); MIATELLO, Massimo, 30032 Fiesso D'Artico (VE) (IT)
(74) Representative: Frare, Paolo
(86) International application number: PCT/IB2021/056639
(87) International publication number: WO 2022/023899

(56) References cited:
- EP-A1- 0 431 648
- EP-A1- 2 518 418
- WO-A1-2004/104488
- WO-A1-2020/110086
- CN-U- 206 145 814
- CN-U- 207 455 736
- IT-A1- MI20 110 102
- JP-A- S60 218 541
- KR-A- 20030 095 509
- KR-B1- 101 959 671
- US-A1- 2013 017 774

## Description

The present invention relates to a fan coil unit. Nowadays, air conditioning systems in many buildings typically comprise a hydraulic circuit, in which a heat-transfer liquid, e.g. water, is run, cooled or heated to a desired temperature.

In many cases the hydraulic circuit is connected to one or more fan coil units, each comprising a heat exchanger, typically of the air/liquid type, configured in such a way that the liquid flowing in the hydraulic circuit passes through such heat exchanger, exchanging heat with the air that hits the outer surface thereof. The heat exchanger typically comprises one or more pipes, inside which the heat transfer fluid circulates, and which are fixed to, and in thermal contact with, a plurality of fins, typically made of aluminium, adapted to increase the heat exchange surface with the air. Such known fan coil units also comprise a fan, which is configured to suck air from the environment external to the fan coil unit, lead this air over the fins and the outer surface of the heat exchanger pipes, so that it exchanges heat with the heat transfer fluid circulating in the pipes, and discharge such air back into the external environment at a different temperature from the inlet temperature.

Such known fan coil units typically comprise filters, e.g. made of non-woven fabric or paper, which filter the air entering and/or leaving the fan coil unit. However, such known fan coil units have certain drawbacks.

In particular, there are frequent cases in which the air sucked in by the fan contains pathogens such as bacteria, viruses, mould, etc., which, thanks to their small size, manage to pass through the filters and can be deposited inside the fan coil unit, particularly in the heat exchanger and in the structure for collecting the condensate produced by such heat exchanger, where they typically find temperature and humidity conditions favourable for their proliferation.

In some cases, pathogens retained by filters can also proliferate on the filters themselves.

Such pathogens can then be released into the environment together with the conditioned air coming out of the fan coil unit, with the resulting health risks that this implies.

In order to counteract this phenomenon, known fan coil units are subjected to frequent maintenance and sanitization, which is typically carried out by removing and washing the filters, and aspirating the surface of the heat exchanger with a vacuum cleaner, or in some cases cleaning the heat exchanger with a pressurized water jet.

However, the cleaning of such known fan coil units is rather awkward, as the heat exchanger is generally not easily accessible from outside the fan coil unit, at least not in its entirety; this means that in most known solutions only a limited region of the heat exchanger is cleaned, thus leaving any pathogens to proliferate in the remaining regions thereof. Furthermore, in known solutions, the heat exchanger is typically permanently attached to the hydraulic circuit where the heat transfer fluid flows, and therefore cannot be removed in order to carry out more thorough cleaning.

In any case, the deposition and proliferation of possible pathogens can occur in internal parts of the fan coil unit (e.g. the fan, the air ducts) that are typically not accessible from outside the unit, unless the fan coil unit is completely disassembled, which, when possible, is typically very complicated and time consuming, with the consequent impossibility to use the fan coil unit during such maintenance operations.

The main consequence of the above is that many known fan coil units are often not cleaned completely effectively, and therefore carry the risk that any pathogens that have accumulated and replicated therein will spread into the environment, with the consequent health risk that this entails.

These problems are more prevalent in hospitals, retirement homes, and other collective facilities, where the risk of pathogens in the air entering the fan coil unit and proliferating there is high, and where there is also a greater need to minimize the time required for maintenance and cleaning of the fan coil units.

WO2020110086A1 discloses a fan coil unit comprising: a substantially parallelepiped-shaped and rigid outer casing which is structured for being firmly fixed to a wall in a substantially vertical position, and is provided with a large through duct adapted to be crossed by the outside air; an air/liquid heat exchanger which is placed inside the through duct so as to be skimmed/crossed by the air that flows along the duct, and is connected to an external hydraulic circuit so as to be crossed also by a hot or cold heat-transfer liquid; a fan adapted to circulate the outside air inside the through duct; an air filter that is placed immediately downstream of the inlet mouth of the through duct; a protective grating which is arranged to close the inlet mouth of the through conduit, and is hinged to the outer casing so as to be adapted to rotate about a substantially horizontal, rotation axis between a closed position in which the protective grating is substantially coplanar/flush with the face of the outer casing, so as to hide the air filter inside the through duct, and an open position in which the protective grating is titled by a given angle with respect to the same face of the outer casing, so as to allow access to the air filter; and finally an electromechanical actuator adapted to move, on command, the protective grating from the closed position to the open position.

The main task of the present invention is to overcome the above-mentioned drawbacks, and in particular to obtain a fan coil unit capable of reducing the risk of pathogens being released therefrom.

As part of this task, an aim of the present invention is to enable effective sanitization of the fan coil unit, reducing the downtime required for its cleaning compared to known solutions.

The above task and aims are achieved by a fan coil unit according to claim 1 comprising:
- an air/fluid heat exchanger removably connectable to a circuit for the circulation of a heat transfer fluid by hydraulic coupling means,
- a first fan, configured to suck in air from a first environment, external to the fan coil unit, bring such air into contact with the air/fluid heat exchanger, so that such air exchanges heat with a heat transfer fluid circulating in the air/fluid heat exchanger, and introduce this air again into the first environment, at a different temperature from the inlet temperature;
- a container enclosing in a removable manner the air/fluid heat exchanger and the first fan, defining a first opening and a second opening, one configured to allow the suction of air from the first environment and its introduction into the container by the action of the first fan, and the other the output of air from inside the container and its introduction into the first environment by the action of the first fan. wherein the container comprises:
- a box-shaped base, to which the air/fluid heat exchanger and the first fan are fixed in a removable manner, and preferably comprising the first opening, inside such base a first conduit being advantageously defined, which places the first opening in fluid communication with the first fan,
- a cover, removably fixed to the base so as to enclose, together with the latter, the first fan and the air/fluid heat exchanger, such cover preferably comprising the second opening,
wherwin said base comprises a first half-shell and a second half-shell, fixed to each other in a removable way, among which said first conduit is defined.

In advantageous embodiments, the container is configured in such a way that air can only enter or leave it through the first or second opening.

In advantageous embodiments, the first opening is configured to allow the output of air from inside the container and its introduction into the external environment by the action of the first fan, while the second opening is configured to allow the suction of air from the first environment and its introduction into the container, by the action of the first fan. Advantageously the fan coil unit comprises a first and/or a second filter which can be positioned removably at the second opening and/or the first opening, respectively, in order to filter the air which from the first environment enters the container, and which from the latter is discharged into the first environment, respectively.

In other advantageous embodiments, the fan coil unit incorporates a single filter that can be removably positioned at both the first and second openings respectively and is configured to filter both the air that enters the container from the first environment and the air that is discharged from the container into the first environment.

In advantageous embodiments, the cover is box shaped, and is conformed in such a way as to enclose the base at the top, and therefore the air/fluid heat exchanger and the first fan when these are fixed thereto.

In advantageous embodiments, the container has a substantially parallelepiped conformation. Advantageously, the cover is removably fixed to the base by means of first removable fixing means, such as screws and/or clips and/or snap-in couplings of the removable type.

Advantageously, the air/fluid heat exchanger is fixed to the base by second removable fixing means, such as screws and/or clips and/or snap-in couplings of the removable type.

Advantageously, the first fan is fixed to the base by third removable fixing means, such as screws and/or clips and/or snap-in couplings of the removable type. In an advantageous embodiment, the hydraulic coupling means are rapid hydraulic coupling means.

It should be noted that "rapid hydraulic coupling means" or hydraulic coupling means "of the rapid type" mean connectors capable of establishing a hydraulic connection, or in other words of placing in fluid communication two hydraulic components, for example two pipes, by means of a "push-pull" or snap-in coupling, for example, or, more generally, without requiring additional fixing operations, such as welding, screwing, using a ring nut, applying a clamp, etc.

Such rapid hydraulic couplings are generally identified on the market as "quick-release couplings".

Preferably, such rapid hydraulic coupling means comprise two first male/female hydraulic connectors, one hydraulically connected to an input end and one to an output end of a tube of the air/fluid heat exchanger suitable for the circulation of a heat transfer fluid, said first male/female hydraulic connectors being removably connectable respectively to two second male/female hydraulic connectors, one hydraulically connected to a delivery pipe and one to a return pipe of a circuit for the circulation of a heat transfer fluid.

Advantageously, the hydraulic coupling means comprise integrated valves, such that when the hydraulic coupling means are disengaged, a liquid cannot escape from them.

In advantageous embodiments, the first male/female hydraulic connectors comprise integrated automatic valves such that, when the first male/female hydraulic connectors are decoupled from the respective second male/female hydraulic connectors, such valves prevent liquid from escaping from the air/fluid heat exchanger pipe through the first male/female hydraulic connectors.

In advantageous embodiments, the second male/female hydraulic connectors comprise integrated automatic valves such that, when the second male/female hydraulic connectors are decoupled from the respective first male/female hydraulic connectors, such valves prevent liquid from escaping from the delivery pipe and the return pipe, respectively, through the second male/female hydraulic connectors.

Advantageously, the container is shaped in such a way as to allow the connection and separation of the air/fluid heat exchanger from a circuit for circulation of a heat transfer fluid by means of hydraulic coupling means, preferably, but not necessarily, of the rapid type, acting from outside the container.

In preferred embodiments, the container is shaped in such a way that the first male/female hydraulic connectors are accessible from the outside thereof, so that they can be coupled to the second male/female hydraulic connectors without needing to open the container.

Advantageously, the base has an outer surface, facing the cover when such base is fixed to the cover, configured to accommodate the air/fluid heat exchanger and the first fan thereon.

In advantageous embodiments, the outer surface of the base comprises a first cavity in which the air/fluid heat exchanger can be removably positioned.

In advantageous embodiments, the outer surface of the base comprises a second cavity in which the first fan can be removably positioned.

In advantageous embodiments, the second cavity communicates with the first conduit, so that the air entering the container through the second opening, after passing through the air/fluid heat exchanger and the first fan, enters the second cavity, is introduced into the first conduit, passes through it and exits the container through the first opening.

Advantageously, the first conduit is formed in the base on the opposite side to the outer surface thereof.

Advantageously, the first opening may be comprised in only one of the first and second half-shells, or it may be defined partially in the first half-shell and partially in the second half-shell.

Advantageously, the first and second half-shells may be removably fixed to each other by fourth removable fixing means, such as screws and/or clips and/or snap-in couplings of the removable type.

In advantageous embodiments, the first fan is rotatably supported, at its ends, by two support brackets, which allow it to rotate about its own axis of rotation.

Advantageously, one of the two support brackets also supports an electric motor, which is adapted to move the first fan.

Advantageously, the support brackets are shaped in such a way that they can be housed and fixed removably into the second cavity formed in the outer surface of the base.

Advantageously, the support brackets comprise housings for the removable fixing of the first male/female hydraulic connectors, respectively, which can be fixed removably into such housings.

In advantageous embodiments, the removable fixing of the first hydraulic male/female connectors in the respective housings is achieved by means of fifth removable fixing means, such as, for example, covers, which can be removably fixed, for example, by means of screws and/or clips and/or snap-in couplings, to close the housings respectively, after the respective first hydraulic male/female connector has been positioned in the respective housings, so as to keep it constrained to the respective housing.

Advantageously, the removable fixing of the first male/female hydraulic connectors to the support brackets of the first fan, which in turn are removably fixed to the base, keeps the air/fluid heat exchanger, to which the first male/female hydraulic connectors are fixed, also removably attached to the base. Advantageously, the fan coil unit comprises an electronic control unit, which is configured to electrically power and/or control the electrical or electronic components of the fan coil unit.

Advantageously, the electronic control unit is fixed to the cover in a removable manner, e.g. by means of sixth removable fixing means, such as screws and/or clips and/or snap-in couplings of the removable type.

In advantageous embodiments, the fan coil unit comprises condensate collection means adapted to collect the condensate that forms on the air/fluid heat exchanger.

In advantageous embodiments, such condensate collection means comprise a drip tray, positioned so that the condensate produced by the air/fluid heat exchanger enters or is conveyed into the drip tray; preferably the drip tray is positioned below the air/fluid heat exchanger, so that the condensate produced by the air/fluid heat exchanger falls into the drip tray by gravity.

In advantageous embodiments, the drip tray is advantageously formed in the base and, preferably, communicates and/or is formed as a single piece with the first cavity in which the air/fluid heat exchanger is positioned.

Advantageously, the drip tray is equipped with a drain, preferably connectable, e.g. by means of a discharge pipe, to a liquid drainage system of a building.

Advantageously, the fan coil unit comprises means for sanitizing the condensate that forms on the air/fluid heat exchanger, adapted to disinfect such condensate before it is discharged from the fan coil unit.

In advantageous embodiments, the condensate sanitization means comprise a condensate sanitization lamp, for example a lamp, preferably a LED lamp, capable of generating ultraviolet light, preferably with a frequency of 254 nm (so-called UVC lamp 254 nm), positioned in such a way as to radiate the condensate contained in the drip tray with such ultraviolet light. In advantageous embodiments, the condensate sanitization lamp is operatively connected to the electronic control unit, which is advantageously configured to control such condensate sanitization lamp.

In advantageous embodiments, the drip tray is made of a material that is transparent to ultraviolet light, and the condensate sanitization lamp is fixed inside the base, outside the drip tray, in such a way as to radiate ultraviolet light towards the drip tray, so that such ultraviolet light crosses the transparent surface of the drip tray and illuminates the condensate contained therein, disinfecting it.

In an advantageous embodiment, the fan coil unit comprises means of sanitizing the air passing through such fan coil unit.

In advantageous embodiments, the means of sanitizing the air passing through the fan coil unit comprise the condensate sanitization lamp when this is arranged in such a way as to radiate ultraviolet light also inside the first conduit formed in the base, so as to also exert a disinfecting action on the air passing through it.

In other advantageous embodiments, such means of sanitizing the air passing through the fan coil unit comprise an air sanitization lamp.

Advantageously, such air sanitization lamp is removably fixed to the first fan, and is therefore removably fixable to the base by the fixing to the latter of the first fan.

Advantageously, the air sanitization lamp is operatively connected to the electronic control unit, which is configured to control such air sanitization lamp.

In a first advantageous embodiment, the air sanitization lamp is a lamp, preferably a LED lamp, capable of generating ultraviolet light, preferably with a frequency of 254 nm (so-called UVC 254 nm lamp), positioned in such a way as to radiate the air passing through the fan coil unit with such ultraviolet light, and to disinfect such air.

In a second advantageous embodiment, the air sanitization lamp is a lamp, preferably an LED lamp, capable of generating ultraviolet light, preferably at a frequency of 185 nm (so-called UVC lamp 185 nm), capable of producing ozone in the air passing through the fan coil unit by radiating such air with such ultraviolet light; in such an advantageous embodiment, the air sanitization lamp is therefore also an ozone generation means.

More generally, in advantageous embodiments, the fan coil unit may comprise ozone generation means, configured to introduce ozone into the air passing through the fan coil unit and/or emit ozone into the first environment; such ozone generation means may comprise the air sanitization lamp, in the advantageous case where the air sanitization lamp is capable of generating ultraviolet light, preferably at a frequency of 185 nm (so-called 185 nm UVC lamp), or, in other advantageous embodiments, such ozone generation means may comprise one or more ozone generators, e.g., of the corona discharge type.

In advantageous embodiments, the air sanitization lamp is advantageously positioned to radiate with ultraviolet light the air leaving the air/fluid heat exchanger and being sucked in by the first fan. Advantageously, if the fan coil unit is equipped with one or more ultraviolet lamps, the container is provided with external walls that are not transparent to ultraviolet light, so that this light cannot escape from the container.

In the advantageous embodiment where the fan coil unit comprises ozone generation means, for example an air sanitization lamp configured to generate ozone, the fan coil unit can advantageously be configured to release such ozone into the first environment in order to sanitize it.

In the advantageous embodiment wherein the fan coil unit comprises ozone generation means, e.g. an air sanitization lamp configured to generate ozone, the fan coil unit is advantageously configured to activate the ozone generation means, e.g. by switching on such air sanitization lamp if such ozone generation means comprise the same, and thereby producing ozone (possibly by introducing it into the first environment), only in the absence of people in the first environment and/or as long as the ozone concentration is below a predetermined value.

In an advantageous embodiment, the electronic control unit of the fan coil unit may be suitably configured and/or programmed to activate the ozone generation means, for example by switching on the air sanitization lamp if such ozone generation means comprise the same, only if suitable presence sensors, operatively connected to the same, confirm that there are no people in the first environment.

In an advantageous embodiment, the electronic control unit of the fan coil unit may be suitably configured and/or programmed to activate the ozone generation means, for example by switching on the air sanitization lamp if such ozone generation means comprise the same, only at predetermined time intervals when it is certain that there are no people in the first environment.

In an advantageous embodiment, the electronic control unit of the fan coil unit may be suitably configured and/or programmed to activate the ozone generation means, for example by switching on the air sanitization lamp if such ozone generation means comprise the same, only with the consent of an operator, who interfaces with the electronic control unit remotely, preferably with a remote control.

In an advantageous embodiment, the electronic control unit of the fan coil unit may be suitably configured and/or programmed to activate the ozone generation means, for example by switching on the air sanitization lamp if such ozone generation means comprise the same, only if the ozone concentration is below a predetermined value; advantageously, the ozone concentration may be detected by one or more appropriate sensors, provided in the fan coil unit and/or operatively associated with the electronic control unit thereof.

In other advantageous embodiments, the means of sanitizing the air passing through the fan coil unit comprise a plurality of air sanitization lamps, all of which are designed to generate ultraviolet light of the same frequency, or several lamps may generate ultraviolet light at different frequencies.

In advantageous embodiments, the fan coil unit comprises means for automatic washing and/or automatic sanitizing and/or automatic disinfection of the air/fluid heat exchanger.

Preferably, such means for automatic washing and/or automatic sanitizing and/or automatic disinfection of the air/fluid heat exchanger comprise a dispenser removably connectable to a hydraulic system for receiving a liquid from such hydraulic system and dispensing such liquid onto the air/fluid heat exchanger, so as to wash it.

In advantageous embodiments, the dispenser is removably fixed to the air/fluid heat exchanger, and is therefore removably fixable to the base by means of the fixing to the latter to the air/fluid heat exchanger.

In advantageous embodiments, the dispenser is or comprises a shower head, a nozzle, or a plurality of nozzles.

In advantageous embodiments, the dispenser can be connected to a hydraulic system in a removable manner by means of hydraulic coupling means, preferably rapid hydraulic coupling means.

Advantageously, the means for automatic washing and/or automatic sanitizing and/or automatic disinfection of the air/fluid heat exchanger comprise valve means configured to allow selective delivery of liquid to the air/fluid heat exchanger by the dispenser.

In an advantageous embodiment, such valve devices are operatively connected to and controlled by the electronic control unit of the fan coil unit.

In an advantageous embodiment, the electronic control unit is configured and/or programmed to control the valve means in such a way as to deliver liquid to the air/fluid heat exchanger only when the first fan is stopped, so that such liquid is not emitted into the first environment.

In a further advantageous embodiment, the electronic control unit is configured and/or programmed to control the valve means in such a way as to dispense liquid to the air/fluid heat exchanger, alternatively or in addition to when the first fan is stopped, when the first fan is running, in such a way as to emit such liquid, in the form of droplets or steam, to the first environment and regulate the degree of humidity therein. In such advantageous embodiment, the means for automatic washing and/or automatic sanitization and/or automatic disinfection, together with the electronic control unit and the first fan, define the means for regulating the humidity of the first environment.

More generally, in advantageous embodiments, the fan coil unit may comprise means for regulating the humidity of the first environment, which may comprise, as in the advantageous embodiment described above, means for automatic washing and/or automatic sanitization and/or automatic disinfection, together with the electronic control unit and the first fan, or may advantageously comprise other components, such as for example a steam generator, controlled for example by the electronic control unit, and configured to dispense steam into the first environment.

In an advantageous embodiment, the fan coil unit may be provided with or connected to humidity detection means (e.g. one or more humidity sensors), suitable for detecting the degree of humidity in the first environment; in such a case, the electronic control unit may be advantageously configured to control the means for regulating the humidity according to the humidity detected in the first environment by the humidity detection means.

In advantageous embodiments, the liquid that is sent to the dispenser can be pre-treated in such a way as to disinfect the same.

In an advantageous embodiment, the fan coil unit is equipped with a lamp to sanitize the liquid that is sent to the dispenser.

Advantageously, such a lamp may be of a type capable of delivering ultraviolet light, preferably of the UVC 254 nm type.

In a further advantageous embodiment, the fan coil unit comprises means for treating one or more components of the fan coil unit and/or the air passing through it with a disinfectant and/or medical substance.

In an advantageous embodiment, such means for treating one or more components of the fan coil unit and/or the air passing through the fan coil unit with a disinfectant and/or medical substance comprise a tank of disinfectant and/or medical liquid from which said disinfectant and/or medical liquid can be selectively collected and dispensed onto an internal component of the fan coil unit and/or the air passing through the fan coil unit.

Advantageously, this disinfectant and/or medical liquid is collected from the tank by a special pump, advantageously controlled by the electronic control unit.

Advantageously, the disinfectant and/or medical liquid is dispensed by means of one or more dispensing nozzles, and/or by connecting the tank to the dispenser (if present), so that the disinfectant and/or medical liquid, or a mixture thereof with the liquid possibly contained in the dispenser, can be delivered to the air/fluid heat exchanger.

In advantageous embodiments, the fan coil unit comprises air exchange means configured for:
- sucking into the fan coil unit a first air flow from the first environment, making such first air flow pass through the fan coil unit, and letting such first air flow out in a second environment, external to the fan coil unit, and distinct from the first environment;
- sucking into the fan coil unit a second air flow from the second environment, making such second air flow pass through the fan coil unit, and letting such second air flow out in the first environment.

Advantageously, the air exchange means are configured in such a way that the first air flow does not mix with the second air flow.

Advantageously, the air exchange means are configured in such a way that heat is exchanged between the first air flow and the second air flow.

Advantageously, the air exchange means comprise:
- a second fan, configured to suck said first air flow from the first environment, to make such first air flow pass through the fan coil unit, and to let such first air flow out in the second environment;
- a third fan, configured to suck the second air flow from the second environment, to make such second air flow pass through the fan coil unit, and to let the second air flow out in the first environment. Advantageously, the air exchange means comprise an air/air heat exchanger, configured to allow the entry and exit of the first and second air flow, and let them exchange heat without mixing them.

Preferably, the second fan is removably fixed to the base, more preferably to the first half-shell. Preferably, the third fan is removably fixed to the base, more preferably to the first half-shell. Preferably, the air/air heat exchanger is removably fixed to the base, more preferably between the first half-shell and the second half-shell.

Advantageously, the air/air heat exchanger is configured to be crossed by the first air flow on its way from the first environment to the second environment through the fan coil unit, and to be crossed by the second air flow on its way from the second environment to the first environment through the fan coil unit, and to allow heat exchange between these two air flows, without mixing them.

In advantageous embodiments, the fan coil unit comprises means for disinfecting the second air flow, configured to disinfect the second air flow after it enters the fan coil unit and before it is emitted into the first environment.

In an advantageous embodiment, the air exchange means are configured to mix the second air flow with the air passing through the fan coil unit by the action of the first fan, prior to the emission of such air into the first environment.

Advantageously, the air exchange means are configured so that the first air flow does not mix with the second air flow inside the fan coil unit, nor with the air passing through the fan coil unit by the action of the first fan.

In advantageous embodiments, the air exchange means comprise first diverter means, configured to selectively divert the second air flow to an outlet conduit in fluid communication with the first environment, so as to emit such second air flow directly into the first environment, or towards the first fan, so as to mix the second air flow with the air passing through the first fan, before introducing such second air flow into the first environment.

In an advantageous embodiment, such first diverter means comprise a first diverter shutter.

Preferably, the first diverter shutter is electrically operable, and more preferably is controlled by the electronic control unit.

Even more preferably, the first diverter shutter is controlled by the electronic control unit on the basis of a specific configuration and/or programming thereof, and/or on the basis of information obtained by means of specific sensors comprised in the fan coil unit and/or operatively connected thereto, and operatively connected to the electronic control unit, and/or following the reception by the electronic control unit of an external command, preferably emitted by a specific remote control.

In advantageous embodiments, the air exchange means comprise second diverter means, configured to selectively divert the second air flow to the air/air heat exchanger, so that it exchanges heat with the first air flow, or towards a by-pass conduit through which the second air flow is led to the first environment without passing through the air/air heat exchanger.

In an advantageous embodiment, such second diverter means comprise a second diverter shutter.

Preferably, the second diverter shutter is electrically operable, and more preferably is controlled by the electronic control unit.

Even more preferably, the second diverter shutter is controlled by the electronic control unit on the basis of a specific configuration and/or programming thereof, and/or on the basis of information obtained by means of specific sensors comprised in the fan coil unit and/or operatively connected thereto, and operatively connected to the electronic control unit, and/or following the reception by the electronic control unit of an external command, preferably emitted by a specific remote control.

In advantageous embodiments, the air exchange means are also configured to suck into the fan coil unit, as an alternative to the first air flow, a third air flow, from a third environment, external to the fan coil unit and distinct from the first environment, have such third air flow pass through the fan coil unit, and discharge the third air flow into a fourth environment, external to the fan coil unit and distinct from both the first environment and the third environment.

In an advantageous embodiment, the fourth environment coincides with the second environment.

In advantageous embodiments, the air exchange means are configured so that heat is exchanged between the third air flow and the second air flow, advantageously within the air/air heat exchanger.

In a further advantageous embodiment, the air exchange means are configured so that the third air flow does not exchange heat with the second air flow, advantageously making the first air flow transit through the by-pass conduit instead of inside the air/air heat exchanger.

In an advantageous embodiment, the air exchange means are enclosed and/or are at least partially defined and/or are associated with the container. Advantageously, the first and second half-shells are configured in such a way that one or more channels are defined between them and the air/air heat exchanger for the passage of the first air flow, and/or the second air flow.

Advantageously, between the first and second half-shells, a first channel is defined to place a first outlet of the air/air heat exchanger in fluid communication with the second fan, and a second channel is adapted to place a second outlet of the air/air heat exchanger in fluid communication with the third fan. Advantageously, the outer surface of the base comprises a third opening and a fourth opening, adapted to place the second fan and the third fan in fluid communication with the first and the second channel, respectively.

In advantageous embodiments, the base comprises a first access conduit configured to allow access into the fan coil unit of the second air flow.

Preferably, this access conduit is defined between the first half shell and the second half shell.

In advantageous embodiments, the second diverter means, e.g. the second diverter shutter, are positioned at the first access conduit, so as to selectively put it in fluid communication with the by-pass conduit, or with a first inlet of the air/air heat exchanger.

In advantageous embodiments, the by-pass conduit is formed in the lower surface of the second half-shell, and is preferably delimited at the bottom by a closing element, which is removably fixed to the second half-shell.

Advantageously, the inlet of the by-pass conduit communicates with the first access conduit through a first access hole, advantageously formed in the second half-shell.

Advantageously, the outlet of the by-pass conduit communicates with the second channel, and therefore with the third fan when the same is connected to such second channel, through a first outlet hole, formed in the second half-shell.

Advantageously, the first access conduit is arranged in such a way that, when the container lid is fixed to the base, the mouth of the first access conduit is positioned at a first intake hole advantageously provided in the cover.

Advantageously, the base comprises, preferably on the second half-shell, also a second access conduit configured to allow access into the fan coil unit of the third air flow.

Advantageously, the fan coil unit comprises means for closing the second access conduit, such as a first plug, to selectively prevent the third air flow from entering the fan coil unit.

Advantageously, the second access conduit communicates, via a second access hole advantageously formed in the second half-shell, with a by-pass channel formed on the lower surface of the second half-shell, and preferably delimited below by the closure element, removably fixed to the second half-shell.

Advantageously, the by-pass conduit communicates with the upper surface of the second half-shell through a second outlet hole, positioned in such a way that an air flow escaping from such second outlet hole enters a second inlet of the air/air heat exchanger. Advantageously, the first half-shell is shaped in such a way that, when it is fixed to the second half-shell, to enclose the air/air heat exchanger, such first half-shell defines an inlet conduit that places the second outlet hole in fluid communication with the second inlet of the air/air heat exchanger.

Advantageously, the inlet conduit is provided with a second access configured to allow the first air flow to access the second inlet of the air/air heat exchanger. Advantageously, the second access conduit is arranged in such a way that, when the container cover is fixed to the base, the mouth of the second access conduit is positioned at a second intake hole provided in the cover.

Advantageously, the second fan comprises an outlet conduit for an air flow emitted by such second fan. Advantageously, the second fan is arranged in such a way that, when the container cover is fixed to the base, the outlet of the outlet conduit is positioned at an output hole advantageously provided in the cover. Advantageously, the air exchange means comprise an outlet conduit through which the second flow, when not mixed with the air moved by the first fan, can be emitted into the first environment, and a suction conduit through which the first flow can be sucked into the fan coil unit.

Advantageously, the fan coil unit comprises means for closing the suction conduit, such as a second plug, to selectively prevent the first air flow from the first environment from accessing the fan coil unit.

In advantageous embodiments, the separate outlet and suction conduits are defined between the outer surface of the cover and a box-shaped covering element, which is removably fixed thereto. Advantageously, the outlet and suction conduits communicate with the inside of the container through an outlet opening and a suction opening, respectively, formed on the cover.

In advantageous embodiments, the suction opening is configured to be in fluid communication with, for example facing, the second access of the inlet conduit, so as to allow the first air flow entering through the suction conduit to reach, by crossing the suction opening and the second access of the inlet conduit, the second inlet of the air/air heat exchanger. In advantageous embodiments, the outlet opening is configured to be in fluid communication with, for example facing, the first diverter means, for example the first diverter shutter, so that such first diverter means can selectively divert the second air flow to the outlet opening, and thus to the outlet conduit, or to the first fan.

In advantageous embodiments, the means for disinfecting the second air flow comprise a disinfection lamp, preferably a LED lamp, capable, of generating ultraviolet light, advantageously with a frequency of 254 nm, positioned so as to radiate with such ultraviolet light the second air flow after its entry into the fan coil unit and before its emission into the first environment.

In advantageous embodiments, the fan coil unit comprises an installation frame, to which the container is removably attachable.

Advantageously, such installation frame comprises part of the hydraulic coupling means, preferably, but not necessarily, of the rapid type.

Advantageously, the installation frame can be hydraulically connectable to a circuit for circulating a heat transfer fluid.

Advantageously, if the hydraulic coupling means for removably connecting the air/fluid heat exchanger to a circuit for circulating a heat transfer fluid are rapid hydraulic couplings, the installation frame can advantageously be configured in such a way that fixing the container to the installation frame automatically causes the air/fluid heat exchanger to be connected to such circuit for circulating a heat transfer fluid by means of the rapid hydraulic couplings.

In advantageous embodiments, second male/female hydraulic connectors, configured to be removably coupled, respectively, to the first male/female hydraulic connectors attached to the air/fluid heat exchanger, are fixed to the installation frame. Advantageously, the second male/female hydraulic connectors of the installation frame can advantageously be hydraulically connected, respectively, to a flow delivery and a return pipe of a circuit for circulation of a heat transfer fluid.

Advantageously, the installation frame is configured in such a way that, when the container is associated therewith, the first male/female hydraulic connectors attached to the air/fluid heat exchanger and accessible from outside the container automatically engage with the second male/female hydraulic connectors attached to the installation frame, thus placing the air/fluid heat exchanger and the circuit for the circulation of a heat transfer fluid in fluid communication.

In preferred embodiments, the installation frame has a hollow conformation, allowing the container to be fixed inside it.

Advantageously, the installation frame is conformed in such a way that the container can be inserted into it by sliding the latter with respect to the installation frame, advantageously in such a direction that the first male/female hydraulic connectors fixed to the air/fluid heat exchanger and integral with the container automatically engage with the second male/female hydraulic connectors present in the installation frame, when they reach an end position corresponding to the end of the sliding.

In advantageous embodiments, the installation frame may comprise means for fluid connection with the first access hole, and/or the second access hole and/or the emission hole present in the container, configured to automatically engage, in a removable manner, with the first access hole, and/or with the second access hole and/or with the emission hole, respectively, when the container is fixed to the frame.

In advantageous embodiments, such fluid connection means comprise a first sleeve, and/or a second sleeve, and/or a third sleeve, configured, to be inserted, respectively, into the first access hole, and/or the second access hole, and/or the emission hole when the container is fixed to the installation frame, so as to establish a fluid connection therebetween, and allow an air flow to enter and/or exit therefrom.

In advantageous embodiments, the installation frame comprises a drip basin configured to collect any liquids that escape from the container of the fan coil unit and/or from the hydraulic coupling means for connecting the air/fluid heat exchanger to a circuit for circulation of a heat transfer fluid, and/or from such circuit for circulation of a heat transfer fluid. In advantageous embodiments, after its connection to a circuit for the circulation of a heat transfer fluid by means of the hydraulic coupling means, preferably of the rapid type, and the electrical connection thereof to an electrical system, the fan coil unit can be enclosed by removable covering means, such as a protective casing, equipped with an opening for the passage of air, or, in the case of installation in a recess, a protective grille that encloses an access opening to such recess.

Advantageously, such removable covering means can be provided with possible openings or conduits to allow the possible fluid connection of the fan coil unit to a second environment and/or a third environment and/or a fourth environment.

It should be noted that a fan coil unit comprising:
- an air/fluid heat exchanger that can be connected to a circuit for circulating a heat transfer fluid,
- a first fan, configured to suck air from a first environment, external to the fan coil unit, to make such air come into contact with the air/fluid heat exchanger, so that such air exchanges heat with a heat transfer fluid circulating in the air/fluid heat exchanger, and to introduce again such air into the first environment, at a temperature different from the one of entry,

wherein the fan coil comprises means of sanitizing the condensate formed on the air/fluid heat exchanger, suitable for disinfecting such condensate before it is discharged from the fan coil unit,
may constitute a second invention in its own right, i.e. independent from the presence of the hydraulic coupling means, the position of the first and second openings, and any other feature of the fan coil unit or parts thereof disclosed above.

Such second invention solves the autonomous technical problem of preventing the condensate produced by the air/fluid heat exchanger and which is discharged outside the fan coil unit from being able to contain potentially dangerous pathogens.

It should also be underlined that such second invention may advantageously comprise one or more of the further features of the fan coil unit, or parts thereof, disclosed above.

It should be noted that a fan coil unit comprising:
- an air/fluid heat exchanger that can be connected to a circuit for circulating a heat transfer fluid,
- a first fan, configured to suck air from a first environment, external to the fan coil unit, to make such air come into contact with the air/fluid heat exchanger, so that such air exchanges heat with a heat transfer fluid circulating in the air/fluid heat exchanger, and to introduce again such air into the first environment, at a temperature different from the one of entry,

wherein the fan coil comprises means of sanitizing the air passing through such fan coil unit,
may constitute a third invention in its own right, i.e. independent from the presence of the hydraulic coupling means, the position of the first and second openings, and any other feature of the fan coil unit or parts thereof disclosed above.

This third invention solves the autonomous technical problem of reducing the presence of pathogenic agents inside the fan coil unit, which can deposit and proliferate inside it, and be released into the environment, even without the need to stop the fan coil unit in order to manually sanitize it.

It is further underlined that such third invention may advantageously comprise one or more of the further features of the fan coil unit, or parts thereof, disclosed above.

It should be noted that a fan coil unit comprising:
- an air/fluid heat exchanger that can be connected to a circuit for circulating a heat transfer fluid,
- a first fan, configured to suck air from a first environment, external to the fan coil unit, to make such air come into contact with the air/fluid heat exchanger, so that such air exchanges heat with a heat transfer fluid circulating in the air/fluid heat exchanger, and to introduce again such air into the first environment, at a temperature different from the one of entry,

wherein the fan coil unit comprises
means for automatic cleaning and/or automatic sanitizing and/or automatic disinfection of the air/fluid heat exchanger,
may constitute a fourth invention in its own right, i.e. independent from the presence of the hydraulic coupling means, the position of the first and second openings, and any other feature of the fan coil unit or parts thereof disclosed above.

Such fourth invention solves the autonomous technical problem of reducing the presence of pathogens inside the air/fluid heat exchanger, which can then be released into the environment, even without the need to stop the fan coil unit in order to manually sanitize it.

It is further underlined that such fourth invention may advantageously comprise one or more of the further features of the fan coil unit, or parts thereof, disclosed above.

It should be noted that a fan coil unit comprising:
- an air/fluid heat exchanger that can be connected to a circuit for circulating a heat transfer fluid,
- a first fan, configured to suck air from a first environment, external to the fan coil unit, to make such air come into contact with the air/fluid heat exchanger, so that such air exchanges heat with a heat transfer fluid circulating in the air/fluid heat exchanger, and to introduce again such air into the first environment, at a temperature different from the one of entry,

wherein the fan coil unit comprises
means for treating one or more components of the fan coil unit and/or the air passing through it with a disinfectant and/or medical substance,
may constitute a fifth invention in its own right, i.e. independent from the presence of the hydraulic coupling means, the position of the first and second openings, and any other feature of the fan coil unit or parts thereof disclosed above.

This fifth invention solves the autonomous technical problem of reducing the emission of pathogens from the fan coil unit into the environment, even without the need to stop the fan coil unit in order to manually sanitize it.

It is further underlined that such fifth invention may advantageously comprise one or more of the further features of the fan coil unit, or parts thereof, disclosed above.

It should be noted that a fan coil unit comprising:
- an air/fluid heat exchanger that can be connected to a circuit for circulating a heat transfer fluid,
- a first fan, configured to suck air from a first environment, external to the fan coil unit, to make such air come into contact with the air/fluid heat exchanger, so that such air exchanges heat with a heat transfer fluid circulating in the air/fluid heat exchanger, and to introduce again such air into the first environment, at a temperature different from the one of entry,
wherein the fan coil unit comprises air exchange means configured for:
- sucking into the fan coil unit a first air flow from the first environment, making such first air flow pass through the fan coil unit, and letting such first air flow out in a second environment, external to the fan coil unit, and distinct from the first environment;
- sucking into the fan coil unit a second air flow from the second environment, making such second air flow pass through the fan coil unit, and letting such second air flow out in the first environment,
may constitute a sixth invention in its own right, i.e. independent from the presence of the hydraulic coupling means, the position of the first and second openings, and any other features of the fan coil unit or parts thereof disclosed above.

Such sixth invention solves the autonomous technical problem of guaranteeing an optimal exchange of air in the environment to be air-conditioned, making the best use of the available space, and without requiring an additional installation with respect to that of a fan coil unit to air-condition the environment.

It is further underlined that such sixth invention may advantageously comprise one or more of the further features of the fan coil unit, or parts thereof, disclosed above.

It should be noted that a fan coil unit comprising:
- an air/fluid heat exchanger that can be connected to a circuit for circulating a heat transfer fluid,
- a first fan, configured to suck air from a first environment, external to the fan coil unit, to make such air come into contact with the air/fluid heat exchanger, so that such air exchanges heat with a heat transfer fluid circulating in the air/fluid heat exchanger, and to introduce again such air into the first environment, at a temperature different from the one of entry,

wherein the fan coil unit comprises means to regulate the humidity of the first environment,
may constitute a seventh invention in its own right, i.e. independent from the presence of the hydraulic coupling means, the position of the first and second openings, and any other features of the fan coil unit or parts thereof disclosed above.

Such seventh invention solves the autonomous technical problem of optimally regulating the humidity in the first environment to be air-conditioned, making the best use of the available space, and without requiring any additional installation other than that of a fan coil unit to air-condition the environment.

It is further underlined that such seventh invention may advantageously comprise one or more of the further features of the fan coil unit, or parts thereof, disclosed above.

It should be noted that a fan coil unit comprising:
- an air/fluid heat exchanger that can be connected to a circuit for circulating a heat transfer fluid,
- a first fan, configured to suck air from a first environment, external to the fan coil unit, to make such air come into contact with the air/fluid heat exchanger, so that such air exchanges heat with a heat transfer fluid circulating in the air/fluid heat exchanger, and to introduce again such air into the first environment, at a temperature different from the one of entry,

wherein the fan coil unit comprises
ozone generation means, configured to introduce ozone into the air passing through the fan coil unit and/or emit ozone into the first environment,
may constitute an eighth invention in its own right, i.e. independent from the presence of the hydraulic coupling means, the position of the first and second openings, and any other feature of the fan coil unit or parts thereof disclosed above.

Such eighth invention solves the autonomous technical problem of sanitizing the air passing through the fan coil unit and being emitted into the environment, and possibly also sanitizing the environment itself, without the need to stop the fan coil unit in order, for example, to sanitize it manually.

It is further underlined that such eighth invention may advantageously comprise one or more of the further features of the fan coil unit, or parts thereof, disclosed above.

The features and advantages of the present invention will be more apparent from the following description, which is to be understood as exemplifying and not limiting, with reference to the appended schematic drawings, wherein:
- figure 1 is a perspective view of a first embodiment of fan coil unit according to the invention;
- figure 2 is a sectional partially perspective view of the detail of figure 1;
- figures 3 and 4 are two perspective views of an installation frame of the fan coil unit as shown in the previous figures;
- figure 5 is an exploded perspective view of the fan coil unit of figure 1;
- figures 6 and 7 are two perspective views of the fan coil unit of figure 1, with some components removed;
- figures 8 and 9 are two perspective views of the fan coil unit as shown in the previous figures, with some components removed;
- figure 10 is a perspective view of two components of the fan coil unit of figures 8 and 9;
- figure 11 is a perspective view of the first fan of the fan coil unit as shown in the previous figures;
- figure 12 is a perspective view of the heat exchanger of the fan coil unit as shown in the previous figures;
- figure 13 is a perspective view of a component of the fan coil unit as shown in the previous figures;
- figure 14 is a perspective view of part of the component of figure 13;
- figure 15 is an exploded perspective view of a second advantageous embodiment of fan coil unit according to the invention;
- figures 16 and 17 are two perspective views of the fan coil unit of figure 15, with some components removed;
- figure 18 is a perspective view of a component of the fan coil unit of figures 16 and 17;
- figures 19 and 20 are two perspective views of a third embodiment of fan coil unit according to the invention;
- figures 21 and 22 are two perspective views of an installation frame of the fan coil unit of figures 19 and 20;
- figure 23 is a perspective view of the fan coil unit of figures 19 and 20 applied to the ceiling and enclosed in a protective casing;
- figure 24 is a view of the fan coil unit of figure 23, with the protective casing removed;
- figure 25 is a perspective view of the fan coil unit of figures 19 and 20 mounted in a recess behind a wall;
- figure 26 is a perspective view of the fan coil unit of figure 27, with the wall partially sectioned;
- figure 27 is a perspective and partially exploded view of the fan coil unit of figures 19 and 20
- figure 28 is a perspective view of the fan coil unit of figure 27, with some components removed;
- figure 29 is a perspective view of the fan coil unit of figure 28, with some components removed;
- figure 30 is a perspective view of the fan coil unit of figure 29, with some components removed;
- figure 31 is a perspective view of the fan coil unit of figure 30, with some components removed;
- figures 32 and 33 are two perspective views of the fan coil unit of figure 30, with some components removed;
- figure 34 is a perspective view of the fan coil unit of figures 32 and 33, with some components removed;
- figure 35 is a perspective view of the fan coil unit of figure 34, with some components removed;
- figure 36 is a perspective view of the fan coil unit of figure 35, with some components removed;
- figure 37 is a further perspective view of the fan coil unit of figure 36;
- figure 38 is a perspective view of the fan coil unit of figure 36, with some components removed;
- figure 39 is a perspective view of a fourth embodiment of fan coil unit according to the invention, with some components removed, in a first operating condition;
- figure 40 is a perspective view of the fan coil unit of figure 39 in a second operating condition;
- figure 41 is a perspective view of the fan coil unit of figure 39 in a third operating condition;
- figure 42 is a perspective view of the fan coil unit of figure 39 in a fourth operating condition;
- figure 43 is a detail of the fan coil unit of figure 42, with some air flows highlighted.

In the appended figures, the number 1 indicates a fan coil unit according to the invention.

The fan coil unit 1 comprises an air/fluid heat exchanger 2, removably connectable to a circuit for the circulation of a heat transfer fluid, not shown, of an air conditioning system of a building, such as, for example, a house, a hospital, a retirement home, a hotel, a restaurant, an office, etc.

Advantageously, the air/fluid heat exchanger 2 comprising a tube 3 connectable, at its inlet end 3a and at its outlet end 3b, advantageously in a removable manner, to a circuit, not shown, for circulating a heat transfer fluid, forming part of the air conditioning system of a building.

In an advantageous embodiment, the tube 3 comprises a plurality of tubular elements 4, comprising sections parallel to each other, connected two by two, at their ends, by curved sections, so as to define as a whole, for the tube 3, a coil conformation.

In a further advantageous embodiment, the tube 3 can be obtained by bending a single tube in a coil-like manner.

Other configurations of the tube 3 are also possible. Advantageously, the air/fluid heat exchanger 2 further comprises a fin pack 5, schematically represented in the appended figures as a parallelepiped, made of a material with high thermal conductivity, such as aluminium, for example.

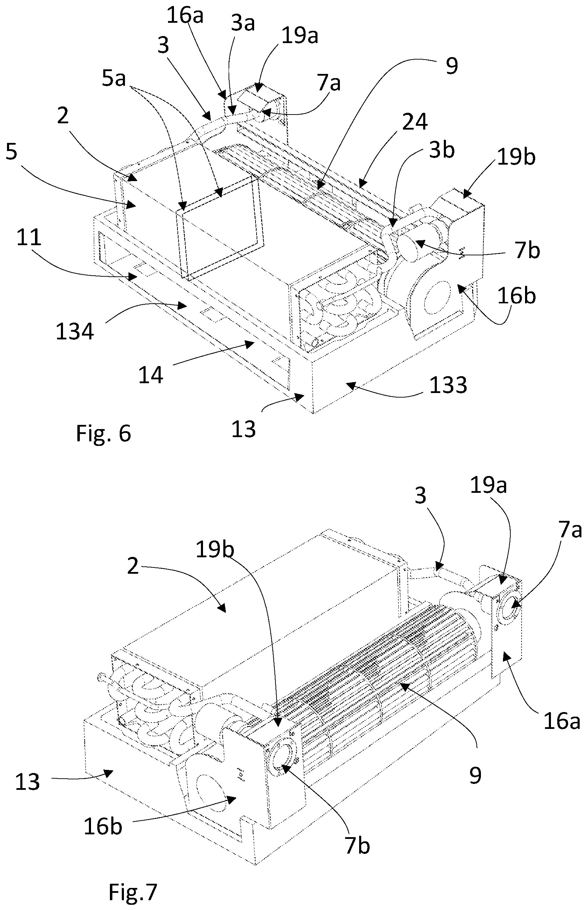

Such fins, two of which, indicated with the number 5a, are schematically represented in figure 6, are advantageously arranged side by side and at a distance from each other, and are perforated, so that they can be crossed, preferably perpendicularly to their lying plane, by the tube 3, in such a way that the outer surface of the latter is in close contact with the edge of the holes formed in the fins 5a, so as to guarantee optimal heat exchange between the outer surface of the tube 3 and the fins 5a themselves.

Other configurations for air/fluid heat exchanger 2 are however contemplated in the invention.

In advantageous embodiments, such as those illustrated in the appended figures, the air/fluid heat exchanger 2, and in particular the tube 3 thereof, can be connected, advantageously in a removable manner, to a circuit for circulating a heat transfer fluid, preferably by means of hydraulic coupling means (e.g. screw connections, or bayonet connections, or using ring nuts to connect two pipes together), more preferably by means of rapid hydraulic coupling means. It should be noted that "rapid hydraulic coupling means" or hydraulic coupling means "of the rapid type" mean connectors capable of establishing a hydraulic connection, or in other words of placing in fluid communication two hydraulic components, for example two pipes, by means of a "push-pull" or snap-in coupling, therefore without requiring additional fixing operations, such as, for example, welding, screwing, using a ring nut, applying a clamp, etc. Such rapid hydraulic couplings are generally identified on the market as "quick-release couplings".

In advantageous embodiments, such as those illustrated in the appended figures, the rapid hydraulic coupling means may advantageously comprise two first male/female connectors 7a, 7b, hydraulically connected one to the inlet end 3a and one to the outlet end 3b of the tube 3.

Advantageously, the first male/female hydraulic connectors 7a, 7b are configured to be removably coupled respectively to second male/female hydraulic connectors 8a, 8b, hydraulically connected one to a delivery pipe and one to a return pipe, not shown, of a circuit for circulating a heat transfer fluid of an air conditioning system.

In advantageous embodiments, such as, for example, those illustrated in the appended figures, the hydraulic coupling means, preferably, but not necessarily, of the rapid type, comprise integrated valves, not shown, such that when such hydraulic coupling means are disengaged (i.e. when the air/fluid heat exchanger 2 is not connected to the circuit for the circulation of a heat transfer fluid from such hydraulic coupling means), a liquid cannot escape therefrom.

For example, in the advantageous embodiment in which the hydraulic coupling means are of the rapid type, and comprise first male/female hydraulic connectors 7a, 7b, these advantageously comprise integrated automatic valves, not shown, such that when the first male/female hydraulic connectors 7a, 7b are decoupled from respective second male/female hydraulic connectors 8a, 8b, such valves prevent liquid from escaping from the tube 3 through the first male/female hydraulic connectors 7a, 7b.

Similarly, the second male/female hydraulic connectors 8a, 8b advantageously comprise integrated automatic valves, not shown, such that, when the second male/female hydraulic connectors 8a, 8b are decoupled from the respective first male/female hydraulic connectors 7a, 7b, such valves prevent liquid from escaping from the delivery pipe and the return pipe, respectively, through the second male/female hydraulic connectors 8a, 8b.

The fan coil unit 1 further comprises a first fan 9, configured to suck air (schematically indicated with arrows 110 with wavy filling) from a first environment 100 to be air conditioned, external to the fan coil unit 1, to bring said air 110 into contact with the air/fluid heat exchanger 2, so that such air 110 exchanges heat with a heat transfer fluid circulating in the air/fluid heat exchanger 2, and to introduce again such air 110 into the first environment 100, at a temperature different from the inlet temperature.

In an advantageous embodiment, the first fan 9 is of the tangential centrifugal type, and is preferably arranged with its axis of rotation A9 parallel to the mean longitudinal axis A2 of the fin pack 5, so as to create an air flow 110 passing through the fin pack 5 in a direction parallel to the lying plane of the fins 5a, so as to maximise the heat exchange therewith.

In advantageous embodiments, such as those illustrated in the appended figures, the fan coil unit 1 preferably comprises a container 10, which removably encloses the air/fluid heat exchanger 2 and the first fan 9, in which a first opening 11 and a second opening 12 are advantageously defined, one configured to allow the suction of air 110 from the first environment 100 and its introduction into the inside of the container 10, by action of the first fan 9, and the other the emission of such air 110 from the inside of the container 10 and its introduction into the first environment 100, by action of the first fan 9.

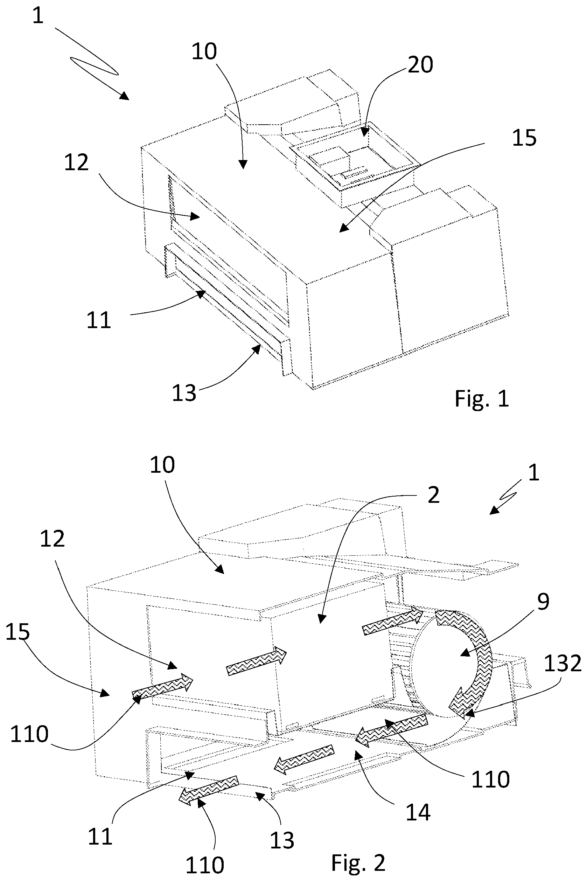

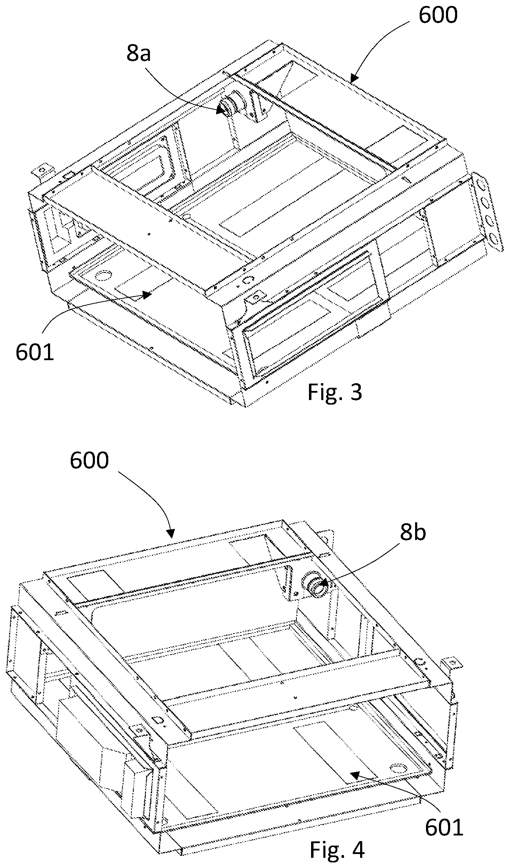

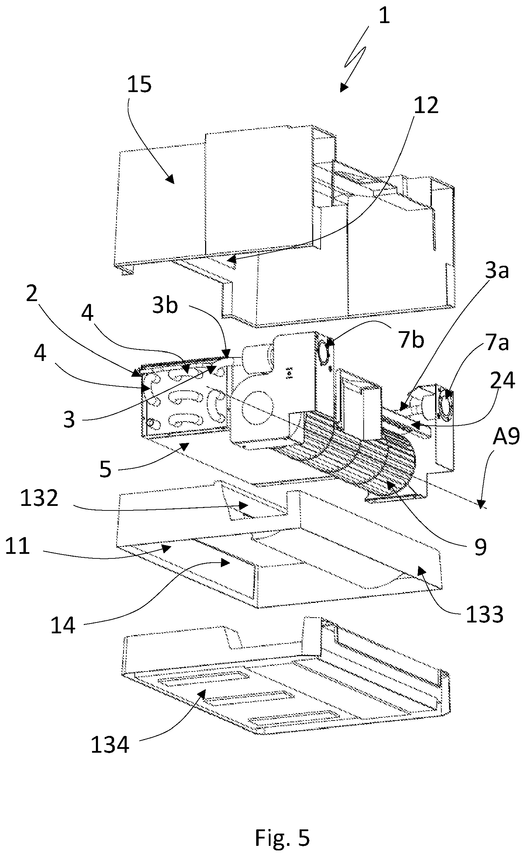

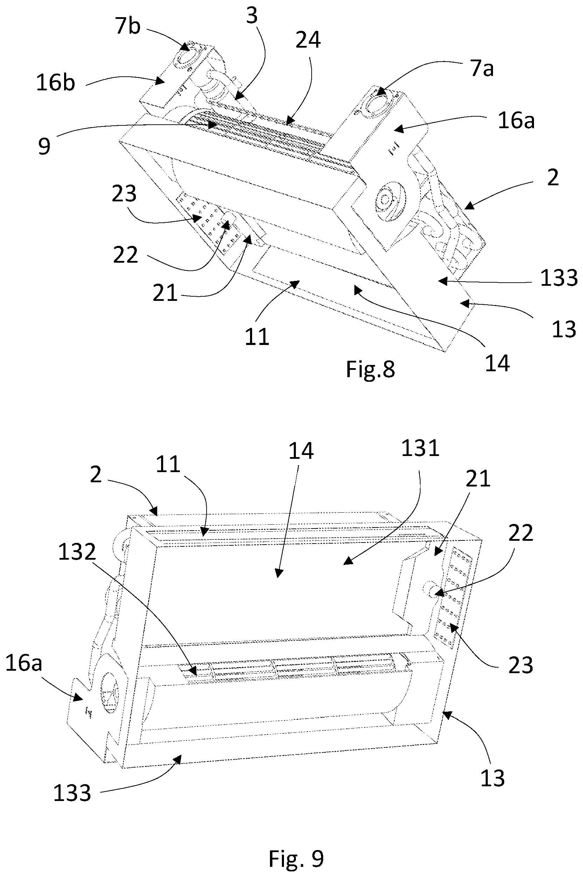

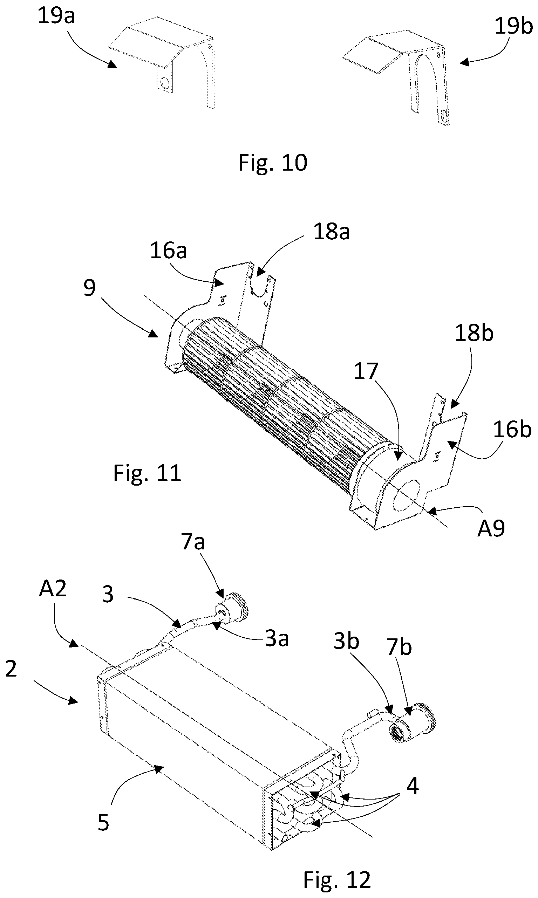

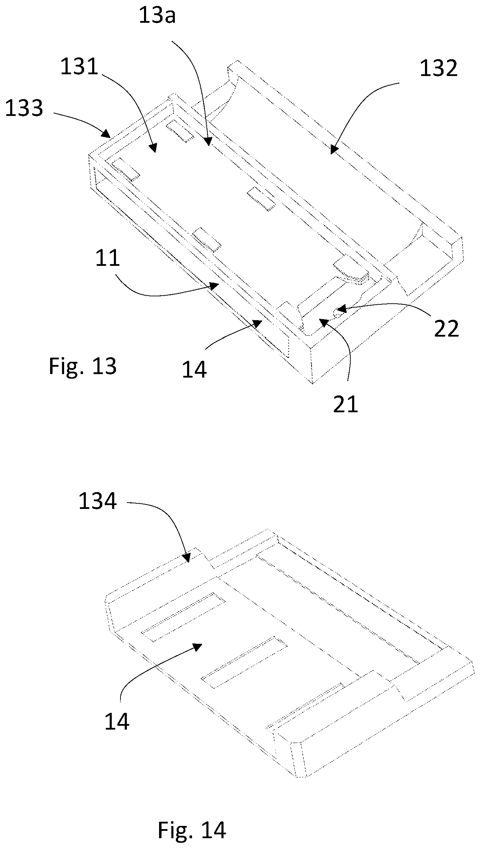

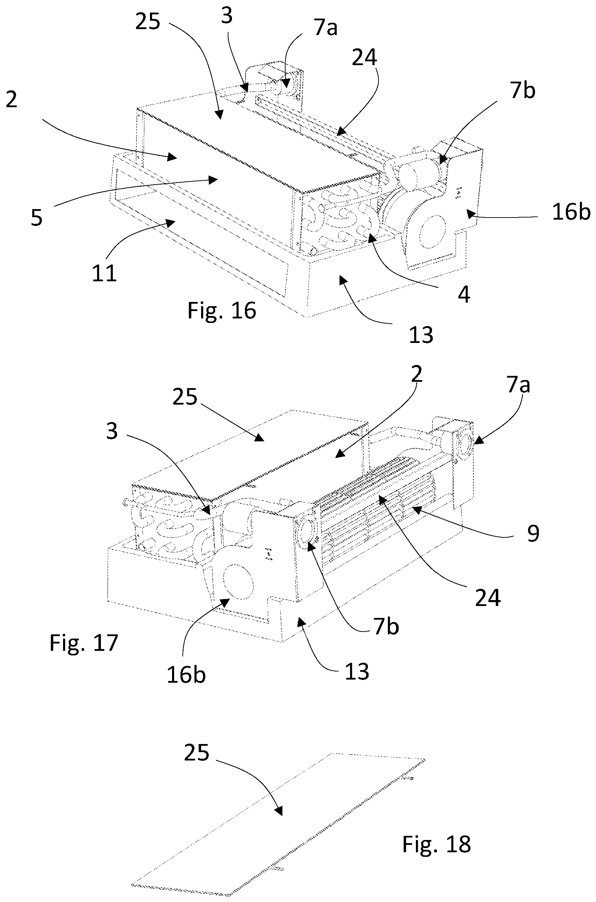

In advantageous embodiments, such as those illustrated in the appended figures 1 to 18, the container 10 is configured in such a way that air 110 can enter or leave the container only through the first opening 11 or the second opening 12.

In advantageous embodiments, such as, for example, those illustrated in the appended figures, the first opening 11 is configured to allow the emission of air 110 from inside the container 10 and its introduction into the first environment 100 by the action of the first fan 9, while the second opening 12 is configured to allow the suction of air 110 from the first environment 100 and its introduction into the inside of the container 10, by the action of the first fan 9. Advantageously, the fan coil unit 1 comprises a first and/or a second filter (e.g. made of non-woven fabric, or paper), not shown, that can be removably positioned respectively at the second opening 12 and/or the first opening 11 in order to, respectively, filter the air 110 that from the first environment 100 enters the container 10, and that from the latter is discharged into the first environment 100.

In other advantageous embodiments, not shown, the fan coil unit 1 can comprise a single filter, not shown, that can be removably positioned at both the first and second openings respectively and is configured to filter both the air that enters the container 10 from the first environment 100 and the air that is discharged from the container into the first environment 100.

In advantageous embodiments, such as those illustrated in the appended figures, the container 10 is shaped in such a way as to allow the connection and separation of the air/fluid heat exchanger 2 from a circuit for the circulation of a heat transfer fluid by means of hydraulic coupling means, preferably, but not necessarily, of the rapid type, acting from outside such container 10.

In preferred embodiments, such as those illustrated in the appended figures, the container 10 is shaped in such a way that the first male/female hydraulic connectors 7a, 7b are accessible from the outside thereof, so that they can be coupled to the second male/female hydraulic connectors 8a, 8b without the need to open the container 10.

In advantageous embodiments, such as those illustrated in the appended figures, the container 10 comprises a box-shaped base 13, to which the air/fluid heat exchanger 2 and the first fan 9 are removably attached. Preferably, the base 13 comprises the first opening 11 and within it a first conduit 14 is defined which places such first opening 11 in fluid communication with the first fan 9.

In advantageous embodiments, such as those illustrated in the appended figures, the container 10 further comprises a cover 15, removably attached to the base 13 so as to enclose, together with the latter, the first fan 9 and the air/fluid heat exchanger 2; in advantageous embodiments, such as those illustrated in the appended figures, the cover 15 comprises the second opening 12.

In advantageous embodiments, such as those illustrated in the appended figures, the cover 15 is box shaped, and is shaped in such a way as to enclose at the top the base 13, and therefore the air/fluid heat exchanger 2 and the first fan 9 when they are attached thereto. In advantageous embodiments, such as those illustrated in the appended figures, the container 10 is substantially parallelepiped shaped.

Advantageously, the cover 15 is removably fixed to the base 13 by means of first removable fixing means, not shown, such as screws and/or clips and/or snap-in couplings of the removable type.

Advantageously, the air/fluid heat exchanger 2 is fixed to the base 13 by second removable fixing means, not shown, such as screws and/or clips and/or snap-in couplings of the removable type.

Advantageously, the first fan 9 is fixed to the base 13 by means of removable third fixing means, not shown, such as screws and/or clips and/or snap-in couplings of the removable type.

In advantageous embodiments, such as, for example, those illustrated in the appended figures, the base 13 also has a box-shaped conformation, and has an outer surface 13a, facing, when the base 13 is fixed to the cover 15, towards the latter, configured to house thereon the air/fluid heat exchanger 2 and the first fan 9.

In advantageous embodiments, such as those illustrated in the appended figures, the outer surface 13a of the base 13 comprises a first cavity 131 in which the air/fluid heat exchanger 2 can be removably positioned. In advantageous embodiments, such as those illustrated in the appended figures, the outer surface 13a of the base 13 comprises a second cavity 132 in which the first fan 9 can be removably positioned.

In advantageous embodiments, such as for example those illustrated in the appended figures, the second cavity 132 communicates with the first conduit 14, so that the air 110 entering the container 10 through the second opening 12, after passing through the air/fluid heat exchanger 2 and the first fan 9, enters the second cavity 132, is introduced into the first conduit 14, passes through it and exits the container 10 through the first opening 11.

Advantageously, the first conduit 14 is formed in the base 13 on the opposite side to the outer surface 13a thereof.

In advantageous embodiments, such as those illustrated in the appended figures, the base 13 comprises a first half-shell 133 and a second half-shell 134, removably attached to each other, between which the first conduit 14 is defined.

Advantageously, the first opening 11 may be comprised in only one of the first and second half-shells (e.g., in the first half-shell 133), or it may be defined partially in the first half-shell 133, and partially in the second half-shell 134.

Advantageously, the first and second half-shells may be removably fixed to each other by fourth removable fixing means, not shown, such as screws and/or clips and/or snap-in couplings of the removable type.

In an advantageous embodiment, the fourth removable fixing means coincide with the first removable fixing means for removably fixing the cover 15 to the base 13 and/or with the third removable fixing means for removably fixing the first fan 9 to the base 13; for example, the first and second half-shells may be removably fixed to each other by the same screws that are applied for removably fixing the cover 15 to the base 13, and the first fan 9 to the base 13.

In advantageous embodiments, such as, for example, those illustrated in the appended figures, the first fan 9 is rotatably supported at its ends by two support brackets 16a, 16b, which allow it to rotate about its axis of rotation A9; advantageously, one of the two support brackets 16a, 16b also supports an electric motor 17, suitable for moving the first fan 9. Advantageously, the support brackets 16a, 16b are shaped in such a way that they can be housed and fixed removably, for example by respective removable fixing means, in the second cavity 132 formed in the outer surface 13a of the base 13.

In such advantageous embodiment, the third removable fixing means for removably fixing the first fan 9 to the base 13 advantageously comprise support brackets 16a, 16b and respective removable fixing means. Advantageously, the support brackets 16a, 16b comprise housings 18a, 18b for removably fixing, respectively, the first male/female hydraulic connectors 7a, 7b, which can be removably fixed in such housings 18a, 18b. In advantageous embodiments, such as those illustrated in the appended figures, the removable fixing of the first male/female hydraulic connectors 7a, 7b, in the housings 18a and 18b, respectively, can be obtained, for example, by means of fifth removable fixing means, such as, for example, covers 19a, 19b, which can be removably fixed, for example by means of screws, and/or by means of snap-in couplings, to close the housings 18a and 18b respectively, after the respective first male/female hydraulic connector 7a, 7b has been positioned therein, so as to keep the latter constrained to the respective housing 18a, 18b. Advantageously, the removable fixing of the first male/female hydraulic connectors 7a, 7b to the support brackets 16a, 16b of the first fan 9, which are in turn removably fixed to the base 13, keeps the air/fluid heat exchanger 2, to which the first male/female hydraulic connectors 7a, 7b are fixed, removably fixed to the base 13; thus, in this advantageous embodiment, as in the advantageous examples illustrated in the appended figures, the second removable fixing means enabling the removable fixing of the air/fluid heat exchanger 2 to the base 13 advantageously comprise the brackets 16a, 16b of the first fan 9, the housings 18a, 18b, the fifth removable fixing means and the first male/female hydraulic connectors 7a, 7b.

In advantageous embodiments, such as those illustrated in the appended figures, the fan coil unit1 comprises an electronic control unit 20, configured to electrically power and/or control the electrical or electronic components (such as the first fan 9) of the fan coil unit 1.

Advantageously, the electronic control unit 20 is fixed to the cover 15 in a removable manner, e.g. by means of sixth removable fixing means, such as screws and/or clips and/or snap-in couplings of the removable type. In advantageous embodiments, such as those illustrated in the appended figures, the fan coil unit 1 comprises condensate collection means for collecting the condensate that may form on the air/fluid heat exchanger 2; in advantageous embodiments, such as those illustrated in the appended figures, such condensate collection means comprise a drip tray 21, positioned in such a way that the condensate produced by the air/fluid heat exchanger 2 enters or is conveyed therein; preferably the drip tray 21 is positioned below the air/fluid heat exchanger 2, so that the condensate produced by it falls into such drip tray 21 by gravity.

In advantageous embodiments, such as those illustrated in the appended figures, the drip tray is advantageously formed in the base 13 and, preferably, communicates and/or is formed as a single piece with the first cavity 131 in which the air/fluid heat exchanger 2 is positioned.

Advantageously, the drip tray 21 is provided with an outlet 22, preferably connectable, for example by means of a drain pipe, not shown, to a liquid drainage system of a building, also not shown.

In advantageous embodiments, such as those illustrated in the appended figures, the fan coil unit 1 is provided with means of sanitizing the condensate, which is designed to disinfect such condensate before it is discharged from the fan coil unit 1.

In advantageous embodiments, such as for example those illustrated in the appended figures, such condensate sanitization means comprise a condensate sanitization lamp 23, for example a lamp, preferably a LED lamp, capable of generating ultraviolet light, preferably with a frequency of 254 nm (so-called UVC lamp 254 nm), positioned in such a way as to radiate the condensate contained in the drip tray 21 with such ultraviolet light.

In advantageous embodiments, such as those illustrated in the appended figures, the condensate sanitization lamp 23 is operatively connected to the electronic control unit 20, which is configured to control such condensate sanitization lamp 23.

In advantageous embodiments, such as for example those illustrated in the appended figures, the drip tray 21 is made of a material that is transparent to ultraviolet light, and the condensate sanitization lamp 23 is fixed inside the base 13, outside the drip tray 21, in such a way as to radiate ultraviolet light towards it, so that such ultraviolet light crosses the transparent surface of the drip tray 21 and illuminates the condensate contained therein, disinfecting it.

In advantageous embodiments, such as those illustrated in the appended figures, the fan coil unit 1 comprises means of sanitizing the air passing through the fan coil unit 1.

In advantageous embodiments, such as, for example, those illustrated in the appended figures, the condensate sanitization lamp 23 is arranged in such a way as to radiate ultraviolet light also within the first conduit 14 formed in the base 13, so as to exert a disinfecting action also on the air 110 passing through the same.

In such advantageous embodiments, the means of sanitizing the air passing through the fan coil unit 1 therefore comprises the condensate sanitization lamp 23.

In other advantageous embodiments, such as those illustrated in the appended figures, such means for sanitizing the air passing through the fan coil unit 1 comprise, in addition to or as an alternative to a condensate sanitization lamp 23 arranged in such a way as to radiate ultraviolet light also within the first conduit 14, an air sanitization lamp 24. Advantageously, said air sanitization lamp 24 is removably attached to the first fan 9 (e.g. it is removably attached to the brackets 16a, 16b), and is thus removably attachable to the base 13 by means of the attachment to the latter of the first fan 9. Advantageously, the air sanitization lamp 24 is operatively connected to the electronic control unit 20, which is configured to control such air sanitization lamp 24.

In a first advantageous embodiment, the air sanitization lamp 24 is a lamp, preferably a LED lamp, capable of generating ultraviolet light, preferably with a frequency of 254 nm (so-called UVC 254 nm lamp), positioned in such a way as to radiate the air 110 passing through the fan coil unit 1 with such ultraviolet light, and to disinfect such air 110.

In a second advantageous embodiment, the air sanitization lamp 24 is a lamp, preferably an LED lamp, capable of generating ultraviolet light, for example at a frequency of 185 nm (so-called UVC lamp 185 nm), capable of producing ozone in the air 110 passing through the fan coil unit 1 by radiating such air 110 with such ultraviolet light; in such an advantageous embodiment, the air sanitization lamp 24 is therefore also an ozone generation means.

More generally, in advantageous embodiments, the fan coil unit 1 may comprise ozone generation means, configured to introduce ozone into the air passing through the fan coil unit 1 and/or emit ozone into the first environment 100; such ozone generation means may comprise the air sanitization lamp 24, in the advantageous case where the air sanitization lamp is capable of generating ultraviolet light, preferably at a frequency of 185 nm (so-called 185 nm UVC lamp), or, in other advantageous embodiments, not shown, such ozone generation means may comprise one or more ozone generators, e.g., of the corona discharge type, not shown.

In advantageous embodiments, such as those illustrated in the appended figures, the air sanitization lamp 24 is advantageously positioned so as to radiate with ultraviolet light the air 110 exiting the air/fluid heat exchanger 2 and being sucked in by the first fan 9; other positions of the air sanitization lamp 24 are however possible.

Advantageously, if the fan coil unit 1 is equipped with one or more ultraviolet lamps, the container 10 is provided with external walls that are not transparent to ultraviolet light, so that this light cannot escape from the container 10.

In the advantageous embodiment where the fan coil unit 1 comprises ozone generation means, for example an air sanitization lamp 24 configured to generate ozone, the fan coil unit 1 can advantageously be configured to release such ozone into the first environment 100 in order to sanitize such first environment 100.

In the advantageous embodiment in which the fan coil unit 1 comprises ozone generation means, for example an air sanitization lamp 24 configured to generate ozone (possibly by introducing it into the first environment), the fan coil unit 1 is advantageously configured to activate the ozone generation means, for example by switching on the air sanitization lamp 24 if such ozone generation means comprise the same, only in the absence of people in the first environment 100 and/or if the ozone concentration is below a predetermined value; advantageously, the ozone concentration can be detected by one or more appropriate sensors, not shown, provided in the fan coil unit 1 and/or operatively associated with the electronic control unit 20 thereof.

In an advantageous embodiment, the electronic control unit 20 of the fan coil unit 1 may be suitably configured and/or programmed to activate the ozone generation means, for example by switching on the air sanitization lamp 24 if said ozone generation means comprise the same, only if suitable presence sensors, not shown, operatively connected to the same, confirm that there are no people in the first environment 100; alternatively, or additionally, the electronic control unit 20 of the fan coil unit 1 may be suitably configured and/or programmed to activate the ozone generation means, for example by switching on the air sanitization lamp 24 if such ozone generation means comprise the same, only at predetermined time intervals (e.g. at night, or at weekends) when it is certain that there are no people in the first environment 100, and/or with the consent of an operator, who may for example interface with the electronic control unit 20 remotely, for example by means of a remote control, without therefore being present in the first environment 100.

In other advantageous embodiments, not shown, the means of sanitizing the air passing through the fan coil unit may comprise a plurality of air sanitization lamps 24, all of which are designed to generate ultraviolet light of the same frequency, or several lamps may generate ultraviolet light of different frequencies.

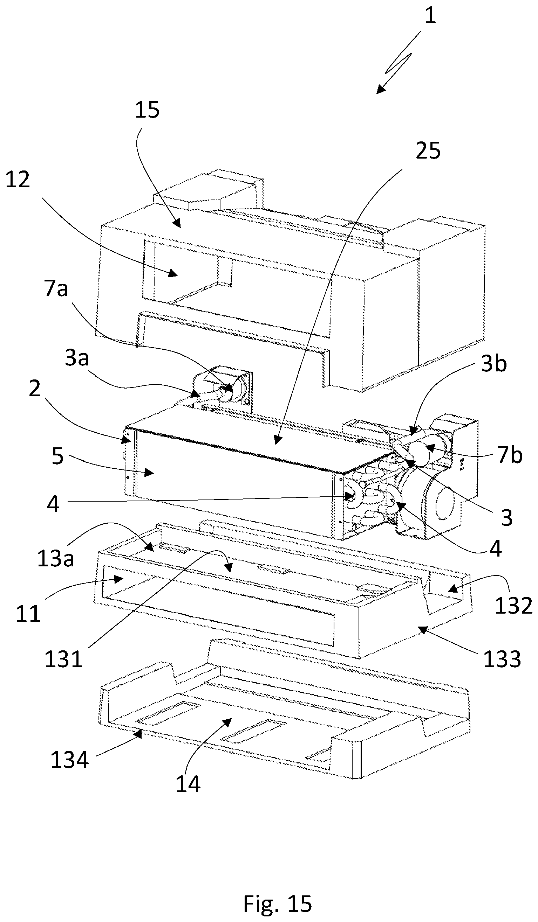

In advantageous embodiments, such as those illustrated in figures 15 to 18, and 39 to 42, the fan coil unit 1 may advantageously comprise means for automatic washing and/or automatic sanitizing and/or automatic disinfecting of the air/fluid heat exchanger 2.

Such means for automatic washing and/or automatic sanitizing and/or automatic disinfecting, may advantageously comprise a dispenser 25, for example a shower head, a nozzle, a plurality of nozzles, etc., removably connectable to a hydraulic system (for example the hydraulic system of a building or a liquid tank, preferably under pressure), for example by means of hydraulic coupling means, preferably of the rapid type, not shown; the dispenser 25 is configured to be able to receive a liquid (e.g. sanitized water) from the hydraulic system to which it is connected, and to dispense such liquid onto the air/fluid heat exchanger 2, so as to wash the same.

Advantageously, the dispenser 25 is removably fixed to the air/fluid heat exchanger 2, and is therefore removably fixed to the base 13 by fixing to the latter to the air/fluid heat exchanger 2.

Advantageously, the means for automatic washing and/or automatic sanitizing and/or automatic disinfection of the air/fluid heat exchanger may comprise valve means, not shown, configured to allow selective delivery of liquid to the air/fluid heat exchanger 2 by the nozzle 25.

In an advantageous embodiment, such valve devices are operatively connected to and controlled by the electronic control unit 20 of the fan coil unit.

In an advantageous embodiment, the electronic control unit 20 may be configured and/or programmed to control the valve means in such a way as to deliver liquid to the air/fluid heat exchanger 2 only when the first fan 9 is stopped, so that such liquid is not emitted into the first environment 100.

In a further advantageous embodiment, the electronic control unit 20 may be configured and/or programmed to control the valve means in such a way as to dispense liquid to the air/fluid heat exchanger 2, in addition to or alternatively to when the first fan 9 is stopped, when the first fan 9 is running, in such a way as to emit such liquid, in the form of tiny droplets or steam, to the first environment 100, in order, for example, to regulate the degree of humidity therein.

In such advantageous embodiment, the means for automatic washing and/or automatic sanitization and/or automatic disinfection, together with the electronic control unit 20 and the first fan 9, define the means for regulating the humidity of the first environment 100.

More generally, in advantageous embodiments, the fan coil unit may comprise means for regulating the humidity of the first environment 100, which may comprise, as in the advantageous embodiment described above, means for automatic washing and/or automatic sanitization and/or automatic disinfection, together with the electronic control unit 20 and the first fan 9, or may advantageously comprise other components, such as for example a steam generator, not shown, controlled for example by the electronic control unit 20, and configured to dispense steam into the first environment 100.

In an advantageous embodiment, not shown, the fan coil unit 1 may be provided with or connected to humidity detection means such as, for example, one or more humidity sensors, not shown, suitable for detecting the degree of humidity in the first environment 100; in such a case, the electronic control unit may be advantageously configured to control the means for regulating the humidity according to the humidity detected in the first environment 100 by such humidity detection means.

In advantageous embodiments, the liquid that is sent to the dispenser 25 may be pre-treated, so as to disinfect it; for example, in an advantageous embodiment, not shown, the fan coil unit 1 may be provided with a lamp, not shown, for sanitizing the liquid that is sent to the dispenser 25; such a lamp may be, for example, of a type capable of delivering an ultraviolet light, for example of the UVC 254 nm type.

In a further advantageous embodiment, not shown, the fan coil unit 1 advantageously comprises means, not shown, for treating one or more components of the fan coil unit 1 and/or the air 110 passing through the same with a disinfectant and/or medical substance; in an advantageous embodiment, not shown, such means may advantageously comprise a tank of disinfectant and/or medical liquid from which such liquid may be selectively collected, for example by means of a suitable pump, not shown, controlled for example by the electronic control unit 20, and dispensed onto an internal component of the fan coil unit 1 (for example onto the air/fluid heat exchanger 2 and/or the first fan 9) and/or onto the air 110 passing through the fan coil unit 1.

The liquid dispensing may take place, for example, by means of one or more dispensing nozzles, not shown, and/or by connecting the tank to the dispenser 25 (if provided), in such a way that the disinfectant and/or medical liquid, or a mixture thereof with the liquid possibly present in the dispenser 25, may be dispensed on the air/fluid heat exchanger 2; in this way, if the first fan 9 is stopped, the disinfectant and/or medical fluid only disinfects the air/fluid heat exchanger 2, whereas, if the first fan 9 is operating, the disinfectant and/or medical fluid is mixed with the air 110 flowing through the air/fluid heat exchanger 2.

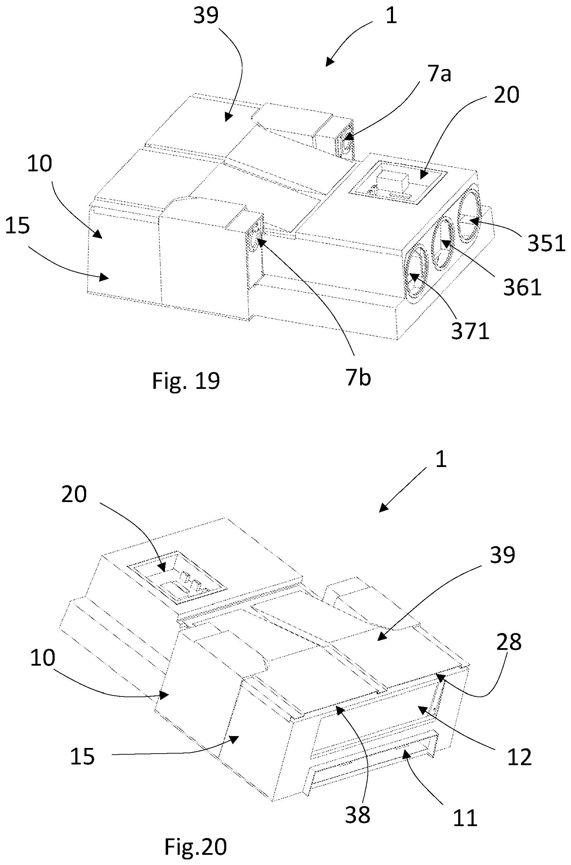

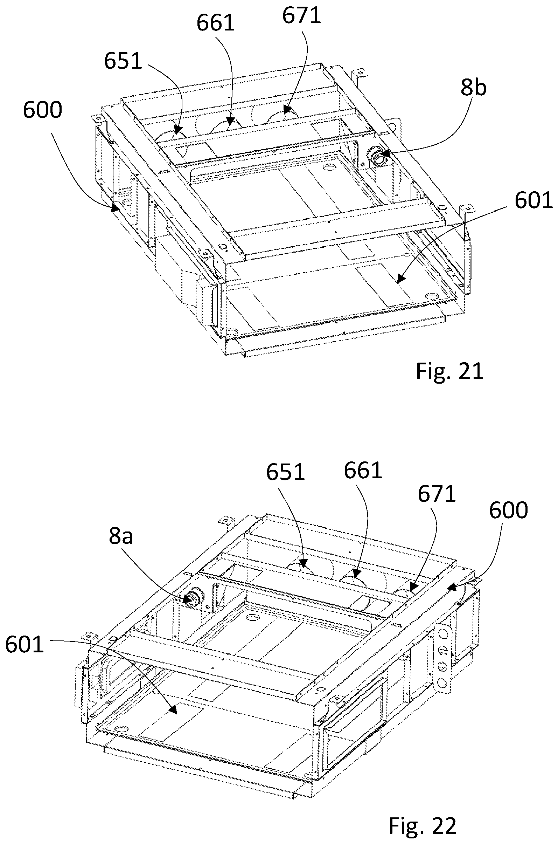

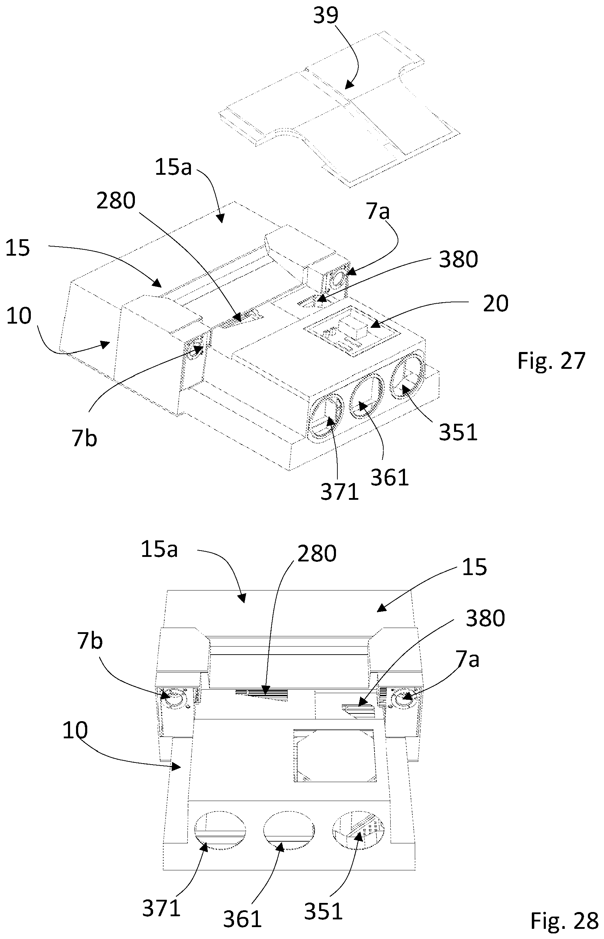

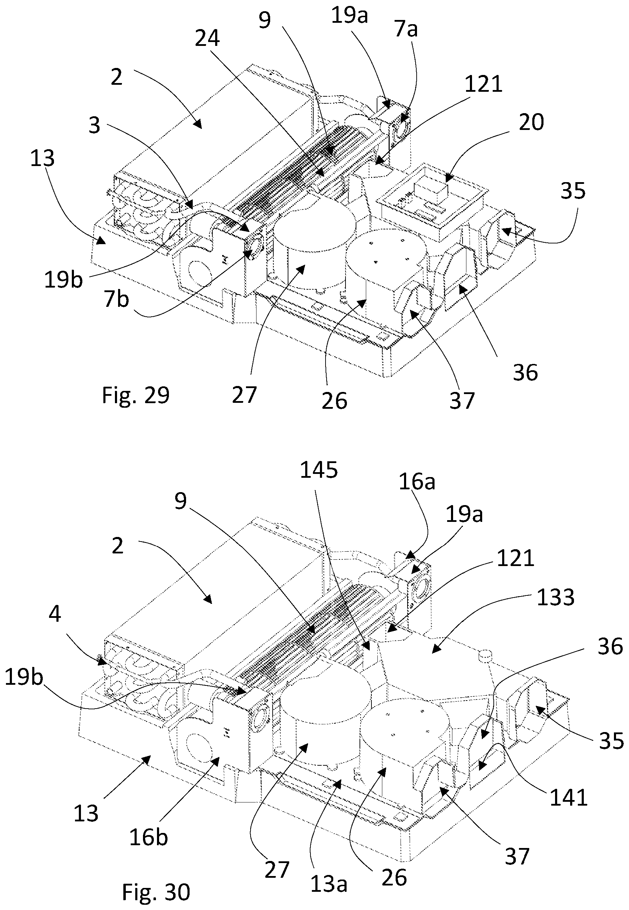

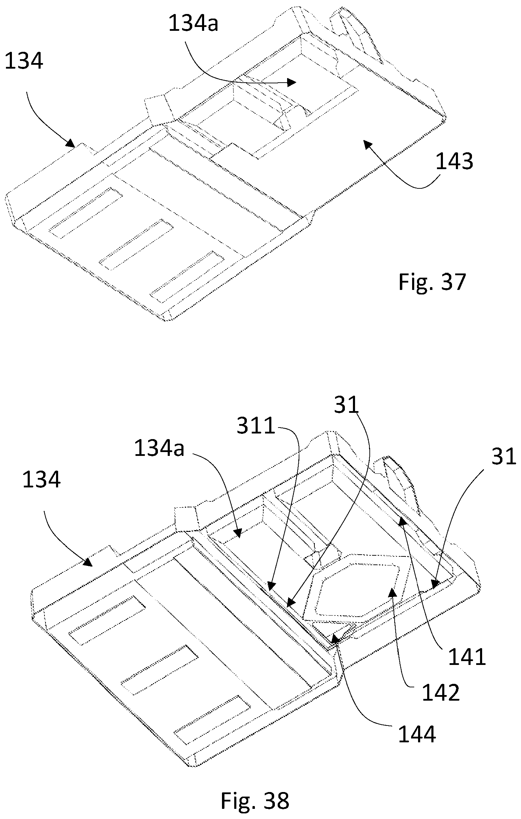

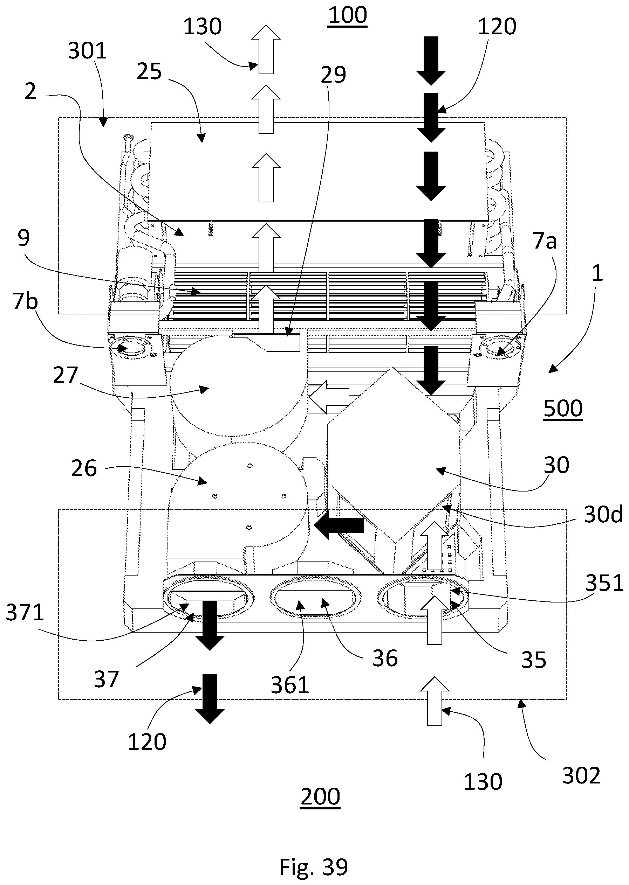

In advantageous embodiments, such as those illustrated in figures 19 to 43, the fan coil unit 1 advantageously comprises air exchange means configured to suck into the fan coil unit 1 a first air flow 120, schematically indicated in figures 39, 40 and 41 with black arrows, from the first environment 100, external to the fan coil unit 1, to make such first air flow 120 cross the fan coil unit 1, and to discharge such first air flow 120 into a second environment 200, external to the fan coil unit 1 and distinct from the first environment 100.

Such advantageous embodiments are particularly useful where, for example, the fan coil unit 1 is provided with ozone generation means, for example an air sanitization lamp 24 configured to generate ozone and introduce the same into the first environment 100, as the air exchange means allow ozone to be removed from the first environment 100 before people enter it. Figures 39 to 42 schematically represent, in a perspective view from above, an advantageous embodiment of the invention in which the fan coil unit 1 (of which in figure 39 part of the container 10 and some other components have not been illustrated) is advantageously arranged inside a recess 500 formed between a protection wall 301 and a rear wall 302, which respectively separate the recess 500 from the first environment 100 and the second environment 200; said recess 500 may advantageously communicate with the first environment 100 and with the second environment 200 through appropriate openings, not shown, which the fan coil unit 1 may advantageously directly face, or connected through appropriate piping, not shown. Advantageously, the air exchange means are also configured to suck into the fan coil unit 1 a second air flow 130, schematically indicated with white arrows, from the second environment 200, have this second air flow 130 cross the fan coil unit 1, and discharge the second air flow 130 into the first environment 100.

Advantageously, the air exchange means are configured in such a way that the first air flow 120 and the second air flow 130 do not mix with each other. Advantageously, the air exchange means are configured to allow heat to be exchanged between the first air flow 120 and the second air flow 130; to this end, the fan coil unit 1 may advantageously comprise an air/air heat exchanger 30, preferably of the so-called "crossflow" type, configured to allow two air flows to enter and exit, and to allow heat to be exchanged between these air flows, but without mixing them.

In advantageous embodiments, such as those illustrated in the appended figures 19 to 43, the air/air heat exchanger 30 is advantageously configured to be crossed by the first air flow 120 in its path from the first environment 100 to the second environment 200 through the fan coil unit 1, and to be crossed by the second air flow 130 in its path from the second environment 200 to the first environment 100 through the fan coil unit 1, and to allow heat exchange between these two air flows, without mixing them.

In advantageous embodiments, such as those illustrated in figures 19 to 43, the air exchange means comprise a second fan 26, configured to suck in the first air flow 120 from the first environment 100, have said first air flow 120 cross the fan coil unit 1, and discharge such first air flow 120 into a second environment 200, external to the fan coil unit 1, and distinct from the first environment 100.

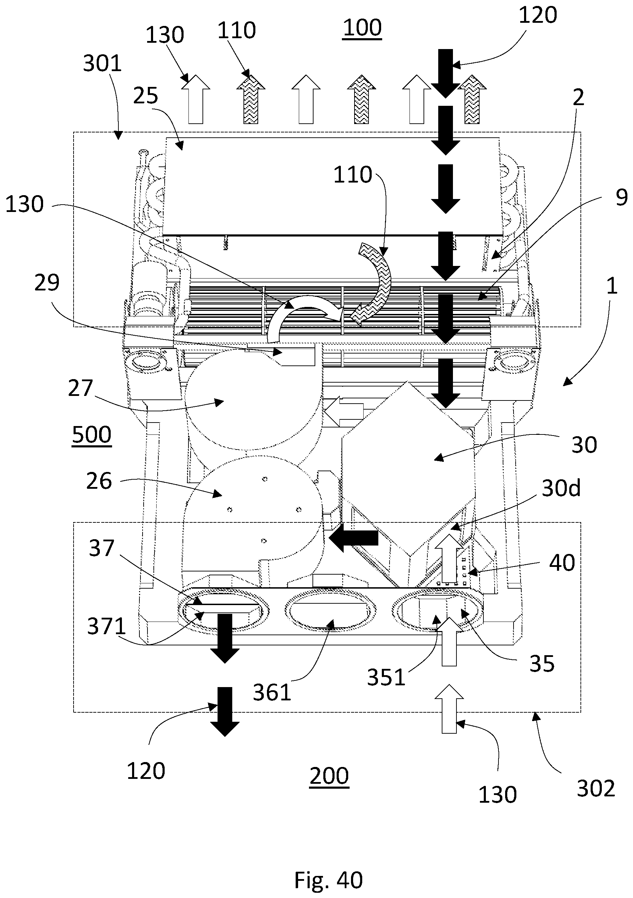

In advantageous embodiments, such as those illustrated in figures 19 to 43, the air exchange means comprise a third fan 27, configured to suck in the second air flow 130 from the second environment 200, have said second air flow 130 cross the fan coil unit 1, and discharge the second air flow 130 into the first environment 100. In an advantageous embodiment, the air exchange means are configured to have the second air flow 130 mix with the air 110 (illustrated for example in figure 40 with wavy filled arrows) passing through the fan coil unit 1 by the action of the first fan 9, prior to the emission of such air 110 into the first environment 100. Advantageously, the air exchange means are configured so that the first air flow 120 does not mix with the second air flow 130 inside the fan coil unit 1, nor with the air 110 passing through the fan coil unit 1 by the action of the first fan 9.

In advantageous embodiments, such as, for example, those illustrated in the appended figures, the air exchange means comprise first diverter means, configured to selectively divert the second air flow 130 towards an outlet conduit 28, shown for example in figure 20, which results in fluid communication with the first environment 100, so as to emit said second air flow 130 directly into said first environment 100 (as, for example, in the advantageous operating condition illustrated in figure 39), or towards said first fan 9 (as, for example, in the advantageous operating condition illustrated in figure 40), so as to mix said second air flow 130 with air 110 flowing through said fan 9, before introducing said second air flow 130 into said first environment 100.

In an advantageous embodiment, shown by way of example in the appended figures 19 to 43, such first diverter means comprise a first shutter means 29, preferably electrically operable, and more preferably controlled by the electronic control unit 20, for example on the basis of a suitable configuration and/or programming thereof, and/or on the basis of information (for example air temperature, environment temperature, humidity, etc.) obtained by means of special sensors, not shown, comprised in the fan coil unit 1 and/or operatively connected thereto, and operatively connected to the electronic control unit 20, and/or following the reception by the electronic control unit 20 of an external command, emitted for example by a special remote control.

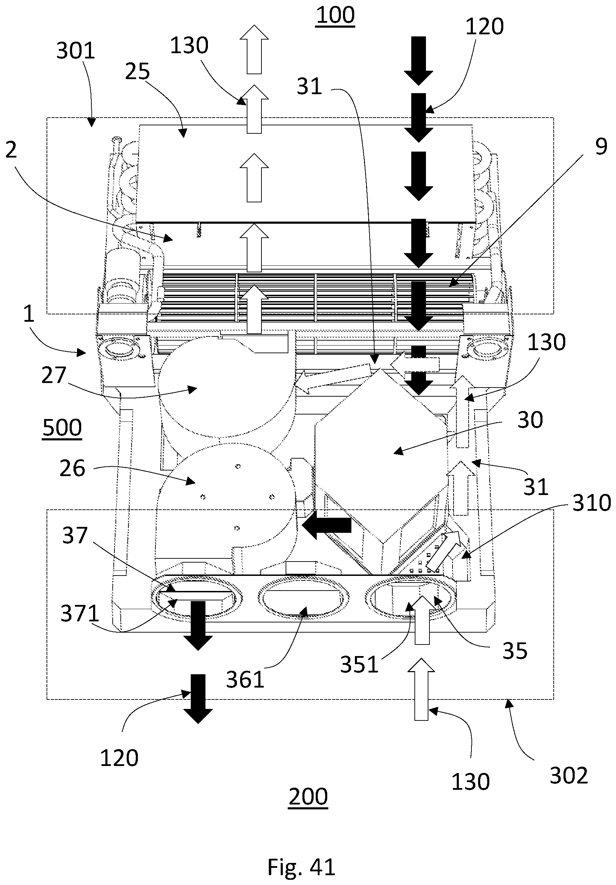

In advantageous embodiments, such as, for example, those illustrated in the appended figures 19 to 43, the air exchange means comprise second diverter means configured to selectively divert the second air flow 130 towards the air/air heat exchanger 30, so that it exchanges heat with the first air flow 120 (such as, for example, in the advantageous operating conditions illustrated in figures 39 and 40), or to a by-pass conduit 31 (such as, for example, in the advantageous operating condition illustrated in figure 41), through which the second air flow 130 is conducted towards the first environment 100 without crossing the air/air heat exchanger 30.

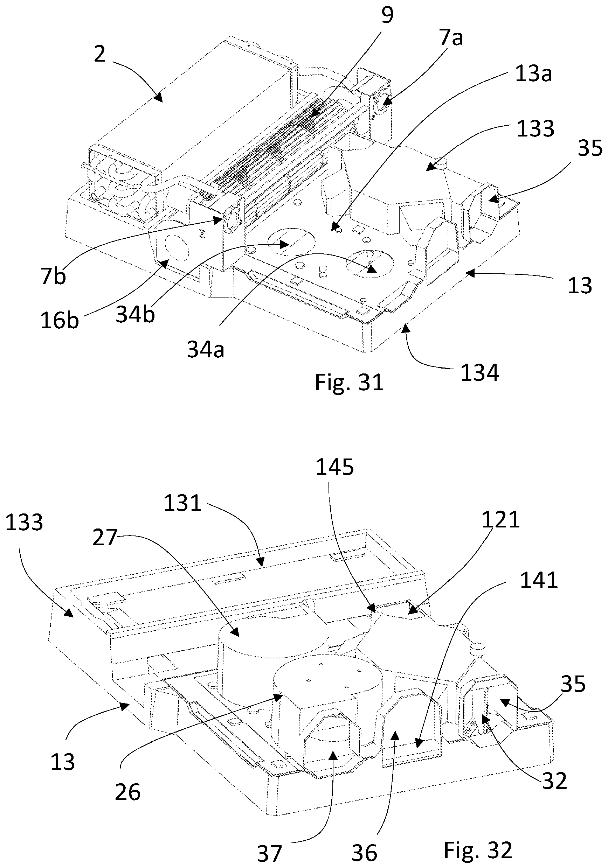

In an advantageous embodiment, shown by way of example in the appended figures 19 to 43, such second diverter means comprise a second shutter means 32, illustrated for example in figure 32, preferably electrically operable, and more preferably controlled by the electronic control unit 20, for example on the basis of a suitable configuration and/or programming thereof, and/or on the basis of information (for example air temperature, environment temperature, humidity, etc.) obtained by means of special sensors, not shown, comprised in the fan coil unit 1 and/or operatively connected thereto, and operatively connected to the electronic control unit 20, and/or following the reception by the electronic control unit 20 of an external command, emitted for example by a special remote control.

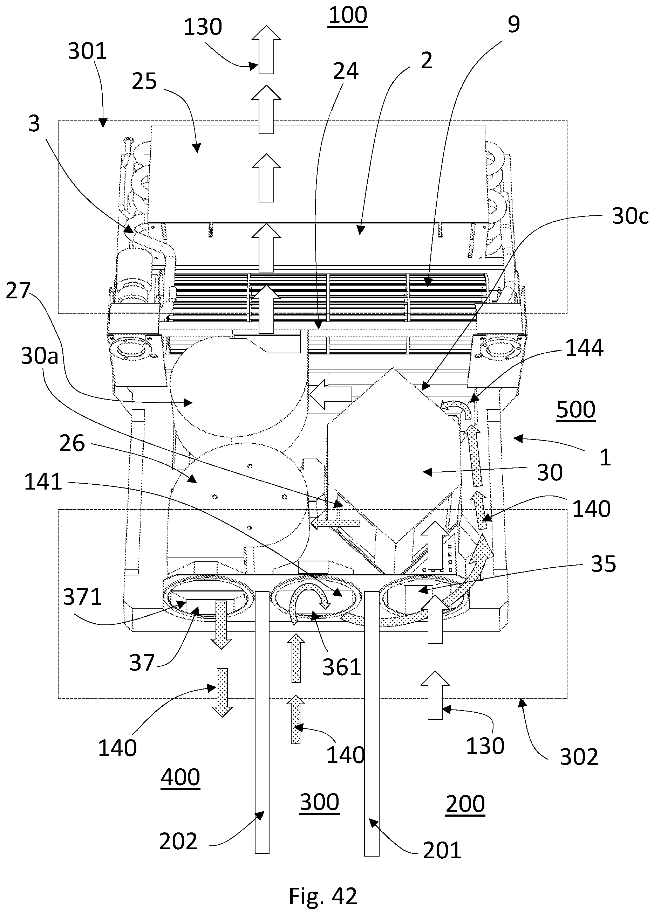

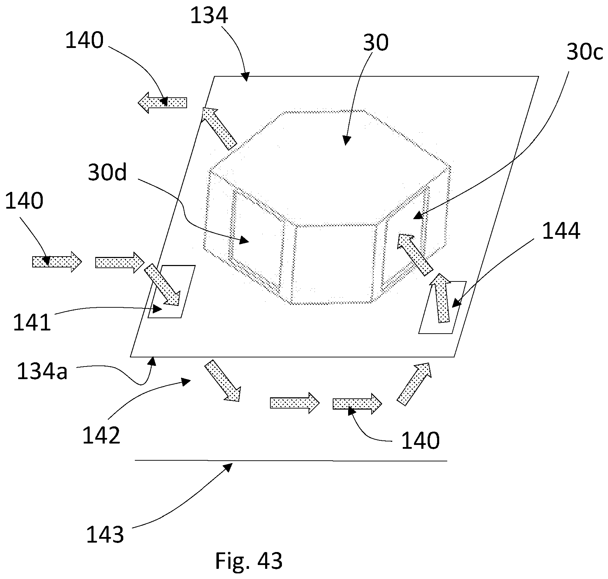

In advantageous embodiments, such as those illustrated in the appended figures 19 to 43, and
as for example in the advantageous operating condition illustrated in figures 42 and 43, the air exchange means can also be configured to suck into the fan coil unit 1, as an alternative to the first air flow 120, a third air flow 140, indicated schematically in figures 42 and 43 with dotted filling arrows, from a third environment 300, external to the fan coil unit 1, and distinct from the first environment 100, make this third air flow 140 cross the fan coil unit 1, and make the third air flow 140 discharge into a fourth environment 400, external to the fan coil unit 1 and distinct from both the first environment 100 and the third environment 300.

In figure 42, the second environment 200, the third environment 300, and the fourth environment 400 have been schematically represented as being separated from each other by walls 201 and 202, schematically represented as rectangles.

It is underlined that the fourth environment 400 may coincide with the second environment 200.

In advantageous embodiments, such as those illustrated in the appended figures 19 to 43, the air exchange means may advantageously be configured such that heat is exchanged between the third air flow 140 and the second air flow 130, advantageously within the air/air heat exchanger 30.

In another advantageous operating condition, not shown, the air exchange means ensure that the third air flow 140 does not exchange heat with the second air flow 130; in such a case, for example, by means of the second diverter means, such as for example the second diverter shutter 32, the second air flow 130 can be made to pass, instead of inside the air/air heat exchanger 30, through the by-pass conduit 31, so that it does not exchange heat with the third air flow 140. In an advantageous embodiment, such as those illustrated in the appended figures 19 to 43, the air exchange means are enclosed and/or are at least partially defined and/or are associated with the container 10.

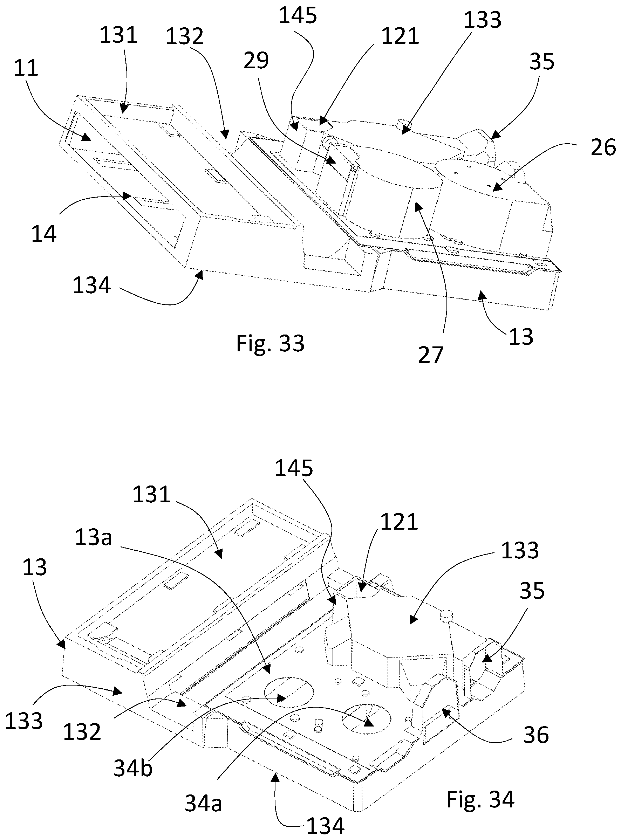

For example, with reference to the appended figures 19 to 43, the air/air heat exchanger 30 is advantageously removably attached to the second half-shell 134 of the base 13, for example by means of seventh removable fixing means, such as screws, and/or interlocking and/or by means of snap-in inserts, not shown. Alternatively, or additionally, the air/air heat exchanger 30 may be advantageously removably attached to the second half-shell 134 by placing the first half-shell 133 above it, as illustrated for example in figure 34, and removably attaching such first half-shell 133 to the second half-shell 134 by means of the fourth removable attachment means, to compose the base 13.

Advantageously, the first and second half-shells may be configured such that one or more channels suitable for the passage of the first air flow 120, and/or the second air flow 130, are defined between them and the air/air heat exchanger 30.

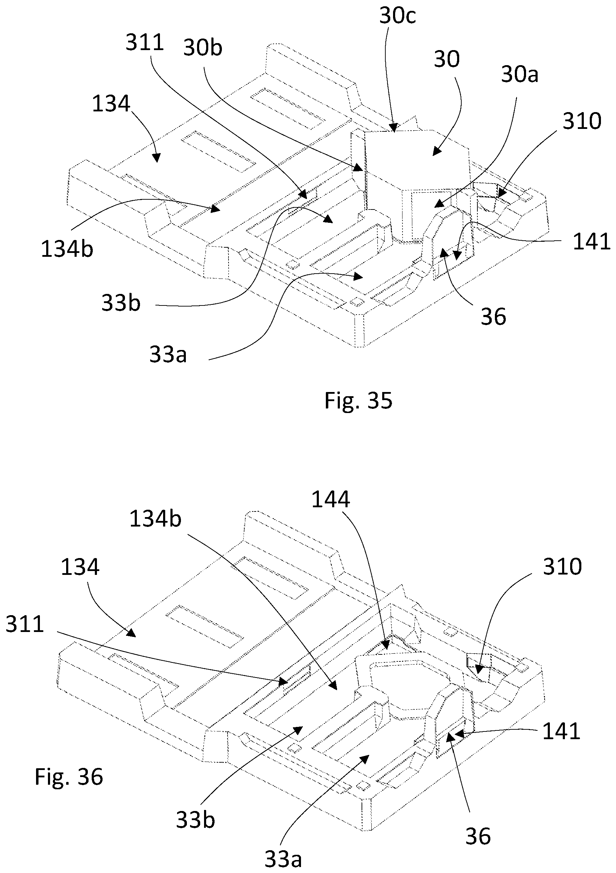

For example, in advantageous embodiments, such as those illustrated in Figures 19 to 43, a first channel 33a (illustrated, for example, in figures 35 and 36) is defined between the first and second half shells, adapted to place a first outlet 30a of the air/air heat exchanger 30 in fluid communication with the second fan 26, and a second channel 33b (illustrated, for example, in figures 35 and 36), adapted to place a second outlet 30b of the air/air heat exchanger 30 in fluid communication with the third fan 27.

In advantageous embodiments, such as, for example, those illustrated in figures 19 to 43, the second fan 26 and the third fan 27 are removably attached to the outer surface 13a of the base 13, corresponding to the upper surface of the first half-shell 133, by means of eighth removable fixing means, not shown, such as, for example, screws and/or clips and/or snap-in type couplings, not shown, or other removable fixing means. Advantageously, the outer surface 13a comprises a third opening 34a and a fourth opening 34b, adapted to place the second fan 26 and the third fan 27 in fluid communication with the first channel 33a and the second channel 33b, respectively.

In advantageous embodiments, such as those illustrated in the appended figures 19 to 43, the base 13 comprises a first access conduit 35, preferably defined between the first half-shell 133 and the second half-shell 134, configured to allow access into the fan coil unit 1 of the second air flow 130.

In advantageous embodiments such as, for example, those illustrated in the appended figures from 19 to 43, the second diverter means, e.g. the second diverter shutter 32, are positioned at the first access conduit 35, so as to selectively put it in fluid communication with the by-pass conduit, or with a first inlet 30d of the air/air heat exchanger 30.

In advantageous embodiments, such as, for example, those illustrated in the appended figures 19 to 43, the by-pass conduit 31, through which the second air flow 130 entering through the first access conduit 35 can be led (subject to suitable adjustment of the second diverter means) towards the first environment 100 without crossing the air/air heat exchanger 30, is advantageously formed in the lower surface 134a of the second half-shell 134, and is preferably delimited at the bottom by a closing element 143, removably fixed to the second half-shell 134, by means of ninth removable fixing means, not shown, such as, for example, screws and/or clips and/or snap-in couplings of the removable type.

Advantageously, the inlet of the by-pass conduit 31 communicates with the first access conduit 35 through a first access hole 310, advantageously formed in the second half-shell 134; advantageously, the outlet of the by-pass conduit 31 communicates with the second channel 33b (and therefore with the third fan 27 when the same is connected to said second channel 33b), through a first outlet hole 311, formed in the second half-shell 134.

Advantageously, the first access conduit 35 is arranged such that, when the cover 15 of the container 10 is attached to the base 13, the mouth of the first access conduit 35 is positioned at a first intake hole 351 advantageously provided in the cover 15. Advantageously, the base 13 comprises, preferably on the second half-shell 134, also a second access conduit 36 configured to allow the third air flow 140 to enter the fan coil unit 1.

Advantageously, the fan coil unit 1 may comprise means for closing the second access conduit 36, not shown, such as a first plug, adapted to selectively prevent the third air flow 140 from entering the fan coil unit 1.

Advantageously, the second access conduit 36 communicates, via a second access hole 141, advantageously formed in the second half-shell 134, with a by-pass channel 142 formed on the lower surface 134a of the second half-shell 134, and preferably delimited below by the closure element 143, removably fixed to the second half-shell 134.

Advantageously, the by-pass channel 142 communicates with the upper surface 134b of the second half-shell 134 through a second outlet hole 144, positioned in such a way that an air flow, for example the third air flow 140, which escapes from said second outlet hole 144, enters a second inlet 30c of the air/air heat exchanger 30.

Advantageously, the first half-shell 133 is shaped in such a way that, when it is fixed to the second half-shell 134, to enclose the air/air heat exchanger 30, such first half-shell 133 defines an inlet conduit 145 that places the second outlet hole 144 in fluid communication with the second inlet 30c of the air/air heat exchanger 30.

Advantageously, the inlet conduit 145 is provided with a second access 121 configured to allow the first air flow 120 to enter the second inlet 30c, as will be further explained below.

Advantageously, the second access conduit 36 is arranged such that, when the cover 15 of the container 10 is attached to the base 13, the mouth of the second access conduit 36 is positioned at a second intake hole 361 advantageously provided in the cover 15. Advantageously, the second fan 26 comprises an outlet conduit 37 for an air flow emitted by such second fan 26; advantageously, the second fan 26 is arranged such that, when the cover 15 of the container 10 is attached to the base 13, the outlet of the outlet conduit 37 is positioned at an emission hole 371 advantageously provided in the cover 15.

Advantageously, the air exchange means comprise an outlet conduit 28 (already introduced above), through which the second flow 130, when not mixed with the air 110 moved by the first fan 9, can be emitted into the first environment 100, and a suction conduit 38 through which the first flow 120 is sucked into the fan coil unit 1.

Advantageously, the fan coil unit 1 may comprise means for closing off the inlet conduit 38, not shown, such as a second plug, adapted to selectively prevent the first air flow 120 from entering the fan coil unit 1 from the first environment 100 (such as, for example, in the advantageous operating condition illustrated in figures 42 and 43).

In advantageous embodiments, such as, for example, those illustrated in the appended figures, the outlet conduit 28 and the suction conduit 38, separate from each other, are defined between the outer surface 15a of the cover 15 and a box-shaped cover element 39, removably attached thereto, for example by means of tenth removable fixing means such as, for example, screws and/or clips and/or snap-in couplings of the removable type; advantageously, the outlet conduit 28 and the inlet conduit 38 communicate with the inside of the container 10 through an outlet opening 280 and an inlet opening 380, respectively, formed on the cover 15.

In advantageous embodiments, such as, for example, those illustrated in the appended figures 19 to 43, the inlet opening 380 is configured to be in fluid communication with, for example facing, the second access 121 of the inlet conduit 145, so as to allow the first air flow 120 entering through the inlet conduit 38 to reach (by crossing the inlet opening 380 and the second access 121 of the inlet conduit 145) the second inlet 30c of the air/air heat exchanger 30.

In advantageous embodiments such as, for example, those illustrated in the appended figures 19 to 43, the outlet opening 280 is configured to be in fluid communication with, for example facing, the first diverter means, for example the first diverter shutter 29, so that such first diverter means can selectively divert the second air flow 130 to the outlet opening 280 (and therefore towards the outlet conduit 28), or to the first fan 9.

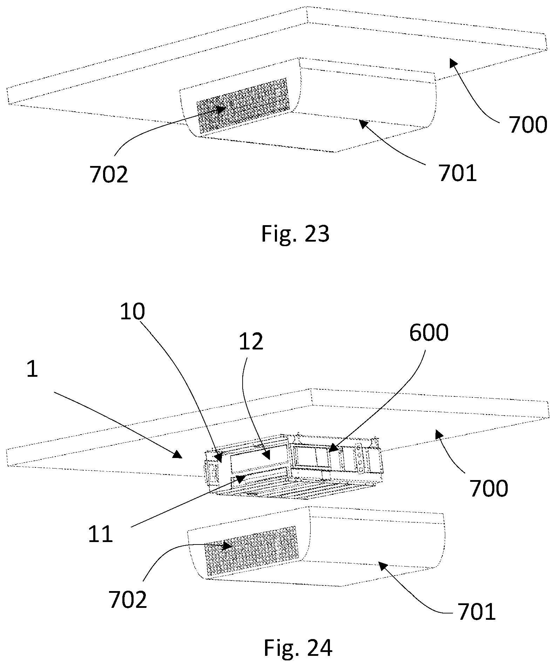

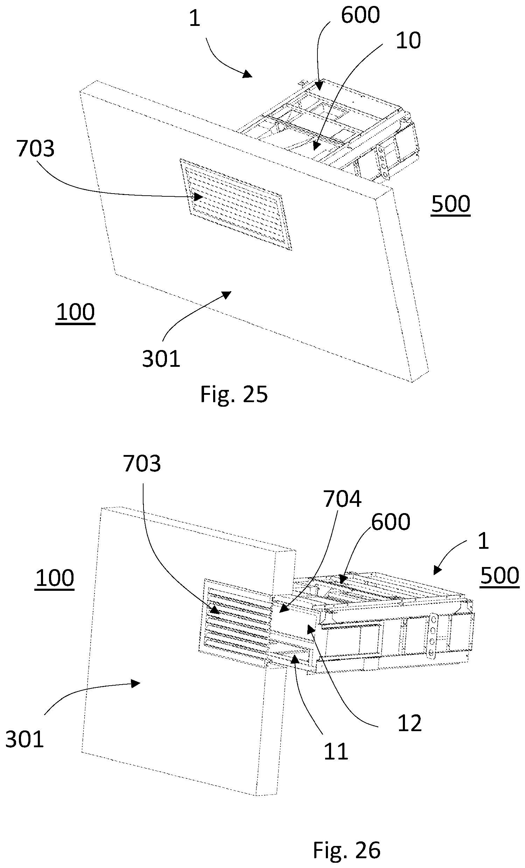

In advantageous embodiments, such as, for example, those illustrated in the appended figures, the fan coil unit 1 may comprise disinfection means for disinfecting the second air flow 130, which may advantageously comprise a disinfection lamp 40, e.g. LED, capable, for example, of generating ultraviolet light, advantageously with a frequency of 254 nm, positioned so as to radiate with said ultraviolet light the second air flow 130 after its entry into the fan coil unit 1 and before its emission into the first environment 100. Advantageously, the fan coil unit 1 may comprise an installation frame 600, to which the container 10 may be removably attached, which may in turn be attached, for example, to a ceiling 700, as for example in the advantageous embodiment illustrated in figures 23 and 24, or to a recess 500 formed behind a covering wall 301, as for example in the advantageous embodiment illustrated in figures 25 and 26, and 39 to 42, or to a floor, not shown, or to a vertical wall, also not shown.

Other installation possibilities are also possible.

In advantageous embodiments, such as those illustrated in the appended figures, the installation frame 600 comprises part of the hydraulic coupling means, preferably of the rapid type, for removably connecting the air/fluid heat exchanger 2 to a circuit for circulating a heat transfer fluid.

In advantageous embodiments, such as those illustrated in the appended figures, second male/female hydraulic connectors 8a, 8b configured in such a way as to be removably coupled respectively to the first male/female hydraulic connectors 7a, 7b fixed to the air/fluid heat exchanger 2 are fixed to the installation frame 600.

In this case, the male/female hydraulic connectors 8a, 8b of the installation frame 600 can be advantageously hydraulically connected to a delivery pipe and a return pipe, not shown, of a circuit for circulating a heat transfer fluid of an air conditioning system, respectively.

The installation frame 600 is advantageously configured in such a way that, when the container 10 is associated therewith, the first male/female hydraulic connectors 7a, 7b attached to the air/fluid heat exchanger 2 and accessible from outside the container 10 automatically engage with the second male/female hydraulic connectors 8a, 8b attached to the installation frame 600, thus placing the air/fluid heat exchanger 2 and the circuit for the circulation of a heat transfer fluid in fluid communication.

In advantageous embodiments, such as those illustrated in the appended figures, the installation frame 600 has a hollow conformation, and such that the container 10 can be fixed inside it; advantageously, the installation frame 600 has a conformation such that the container 10 can be inserted therein by sliding the latter with respect to the installation frame 600, advantageously in a direction such that the first male/female hydraulic connectors 7a, 7b, fixed to the air/fluid heat exchanger 2 and integral with the container 10, automatically engage with the second male/female hydraulic connectors 8a, 8b present in the installation frame 600, upon reaching an end position corresponding to the end of the sliding.

In advantageous embodiments, such as, for example, those illustrated in figures 19 to 43, the installation frame 600 may advantageously comprise fluid connection means to the first intake hole 351, and/or to the second intake hole 361 and/or to the output hole 371, configured to automatically engage, removably, with the first inlet hole 351, and/or with the second intake hole 361 and/or with the output hole 371, respectively, when the container 10 is attached to the frame.

In advantageous embodiments such as, for example, those illustrated in figures 19 to 43, such fluid connection means comprise a first sleeve 651, and/or a second sleeve 661, and/or a third sleeve 671, configured, to be inserted, respectively, into the first intake hole 351, and/or the second intake hole 361, and/or the output hole 371 when the container 10 is fixed to the installation frame 600, so as to establish a fluid connection therebetween, and allow an air flow to enter and/or exit therefrom.

Advantageously, the container 10 may be removably fixed to the installation frame 600 by means of eleventh removable fixing means, not shown, such as screws and/or clips and/or snap-in couplings of the removable type.

In advantageous embodiments, the installation frame 600 comprises a drip basin 601 configured to collect any liquids, for example condensate, that escape from the container 10 of the fan coil unit 1 and/or from the hydraulic coupling means for connecting the air/fluid heat exchanger 2 to a circuit for circulation of a heat transfer fluid not shown, and/or from such circuit for circulation of a heat transfer fluid.

In other advantageous embodiments, not shown, the fan coil unit 1 may be installed without the installation frame 600, in which case, advantageously, the second male/female hydraulic connectors 8a, 8b, if advantageously provided, may only be attached to a delivery pipe and a return pipe of a circuit for circulating a heat transfer fluid of an air conditioning system.

In advantageous embodiments, after its connection to a circuit for the circulation of a heat transfer fluid by means of the hydraulic coupling means, preferably of the rapid type, and the electrical connection thereof to an electrical system, for example by electrical connectors of the known type, not shown, the fan coil unit 1 can be enclosed by removable covering means, such as a protective casing 701, equipped with an opening 702 for the passage of air, or which, in the case of installation in a recess 500, a protective grille 703 that encloses an access opening 704 to such recess 500.

In advantageous embodiments, for example where the removable covering means comprise the protective casing 701, they may advantageously be provided with any other openings or conduits, not shown, to allow the possible fluid connection of the fan coil unit 1 to a second environment 200 and/or a third environment 300 and/or a fourth environment 400.

The operation of the fan coil unit 1 according to the invention is as follows.

A fan coil unit 1 according to the invention may be installed, for example, by fixing the installation frame 600 to a ceiling 700, or in a recess 500, or to a floor (not shown), or to a vertical wall (not shown) in which a delivery pipe and a return pipe are provided, not shown, of a circuit for circulating a heat transfer fluid of an air conditioning system, and hydraulically connecting the second male/female hydraulic connectors 8a, 8b of such installation frame 600, to the delivery pipe and the return pipe, respectively.

In advantageous embodiments, such as those illustrated in the appended figures 19 to 43, wherein the fan coil unit comprises air exchange means, and the installation frame 600 comprises fluid connection means to the first intake hole 351, and/or the second intake hole 361 and/or the output hole 371, the latter may be connected, for example by means of suitable piping and/or air channels, to a second environment 200 and/or a third environment 300 and/or a fourth environment 400, respectively, for example by means of suitable piping or air conduits, not shown.

The container 10 (with the various components of the fan coil unit 1 assembled therein) is then inserted into the installation frame 600, advantageously until the end position is reached in which, if provided, the first male/female hydraulic connectors 7a, 7b are automatically coupled with the second male/female hydraulic connectors 8a, 8b. If rapid hydraulic couplings are not provided, the connection between the air/fluid heat exchanger 2 and a delivery pipe and a return pipe, not shown, of a circuit for circulating a heat transfer fluid, can advantageously be made using the hydraulic coupling means provided in the fan coil unit, such as a hydraulic bayonet coupling, a hydraulic coupling fixed by a ring nut, etc.

In advantageous embodiments, such as those illustrated in the appended figures 19 to 43, wherein the fan coil unit 1 comprises air exchange means, and the installation frame 600 comprises fluid connection means to the first intake hole 351, and/or the second intake hole 361 and/or the output hole 371, insertion of the container 10 into the installation frame 600 also automatically involves coupling the first sleeve 651 to the first intake hole 351, and/or the second sleeve 661 to the second intake hole 361 and/or the third sleeve 671 to the output hole 371, respectively.

If it is desired to use the fan coil unit 1 to suck a third air flow 140 into the fan coil unit 1 from a third environment 300, external to the fan coil unit 1, and distinct from the first environment 100, make such third air flow 140 pass through the fan coil unit 1, and discharge the third air flow 140 into a fourth environment 400, external to the fan coil unit 1 and distinct from both the first environment 100 and the third environment 300, as, for example, in the operating mode illustrated for example in figures 42 and 43, the intake conduit 38 may be closed, for example with a second plug, not shown, so as to prevent a first air flow 120 from entering the fan coil unit 1 from the first environment 100, while the second access conduit 36 is kept open.

Vice versa, if a first air flow 120 is to be sucked from the first environment 100, as for example in the operating conditions illustrated in figures 39 to 41, the suction conduit 38 is kept open, while the second access conduit 36 is closed, for example by a first plug, not shown.

In the event that the installation frame 600 is not present, the container 10 can be fixed directly to, for example, a ceiling 700, in a recess, on the floor, on a vertical wall, for example by means of twelfth removable fixing means, not shown, such as screws, not shown, taking care to connect the air/fluid heat exchanger 2 to the delivery pipe and the return pipe, not shown, of a circuit for the circulation of a heat transfer fluid, by means of the hydraulic coupling means provided in the fan coil unit; in the advantageous case in which these hydraulic connection means are of the rapid type, and in particular comprise the first and second male/female hydraulic connectors, the connection can advantageously be made by coupling the first male/female hydraulic connectors 7a, 7b with the second male/female hydraulic connectors 8a, 8b.

If provided, the first intake hole 351, and/or the second intake hole 361, and/or the output hole 371, are then advantageously placed in fluid communication with suitable connecting channels with a second environment 200, and/or with a third environment 300, and/or with a fourth environment 400.

At this point it is sufficient to electrically connect the fan coil unit 1 to the electrical system of the building, which is not shown, for example by means of common electrical connectors, not shown.

The installation of the fan coil unit 1 may possibly end with the positioning of removable covering means to cover the fan coil unit 1, such as a protective casing 701 or, in the case of installation in a recess 500, a protective grille 703.

It is underlined that the fan coil unit 1 may be installed in any position, for example, as in the embodiments illustrated in the appended figures, with the container 10 thereof lying in a substantially horizontal lying plane, not shown, or, in other advantageous embodiments, not shown, with the container 10 lying, for example, in a substantially vertical lying plane. Other positions are however possible.

A heat transfer fluid, e.g. water, at a desired temperature, can be circulated in the air/fluid heat exchanger 2 of the fan coil unit 1, e.g. by means of special pumping means, not shown, belonging for example to the air conditioning system of the building.

By operating the first fan 9, this sucks in the air 110 from the first environment 100 with which the second opening 12 communicates, passes such air 110 through the air/fluid heat exchanger 2, so that it exchanges heat with the heat transfer fluid circulating therein, and then re-emits such air 110 into the first environment 100, at a different temperature from the inlet temperature.

Depending on whether the first environment 100 is to be cooled or heated, a heat transfer fluid colder or warmer than the temperature in the first environment 100 may be used.

In advantageous embodiments, such as, for example, those illustrated in the appended figures, wherein the fan coil unit 1 is provided with means for sanitizing the air 110 passing through the fan coil unit 1, such as, for example, the air sanitization lamp 24, and/or the condensate sanitization lamp 23, if this is configured to also illuminate the air 110, selectively activating them, e.g. by means of the electronic control unit 20 (e.g. at desired time intervals, and/or upon consent of one or more sensors indicating the absence of people in the first environment 100, and/or following the reception of an external command, emitted for example by a special remote control, etc.), it is possible to sterilize the air 110 inside the fan coil unit 1, thus ensuring that sterilized air is introduced into the first environment 100.

In advantageous embodiments in which the fan coil unit 1 comprises means for generating ozone, for example an air sanitization lamp 24 configured to generate ozone, the fan coil unit 1 may advantageously be configured (for example by appropriate configuration or programming of the electronic control unit 20) to deliver such ozone in the first environment 100, in the absence of people therein, and/or until the concentration of ozone (detected for example by one or more special sensors provided in the fan coil unit 1 and/or operatively associated with the electronic control unit thereof) is lower than a predetermined value, in order to sanitize the same.

If the fan coil unit 1 is equipped with air exchange means, these can be activated, e.g. by means of the electronic control unit 20, to remove the air containing ozone from the first environment 100 before people enter it.

In advantageous embodiments, such as those illustrated in the appended figures, wherein the fan coil unit 1 is equipped with means for automatic washing and/or automatic sanitizing and/or automatic disinfecting the air/fluid heat exchanger 2, such as for example the dispenser 25, these can be activated, for example by means of the electronic control unit 20, at a desired time, to wash the air/fluid heat exchanger 2, thereby removing therefrom any pathogens that might be introduced into the first environment 100 with the air 110.

Advantageously, if the fan coil unit is equipped with means for regulating the humidity of the first environment 100, by operating them, for example by means of the electronic control unit 20, it is possible to regulate the degree of humidity in the first environment 100.

For example, by using the electronic control unit 20 to activate the means for automatically washing and/or automatically sanitizing and/or automatically disinfecting the air/fluid heat exchanger 2 while the first fan 9 is operating, it is advantageously possible to add a liquid to the air 110 before it is introduced into the first environment 100, thus making it possible to control the humidity therein.

In advantageous embodiments, such as those illustrated in the appended figures, wherein the fan coil unit 1 is provided with means for sanitizing the condensate, such as for example the condensate sanitization lamp 23, these can be activated, for example by means of the electronic control unit 20, prior to discharging outside the fan coil unit 1 the condensate generated in the air/fluid heat exchanger 2, thus ensuring that the latter is free from pathogenic agents prior to its discharge.

In advantageous embodiments, such as, for example, those illustrated in the appended figures 19 to 43, in which the fan coil unit 1 comprises air exchange means, the latter can be activated, for example by means of the electronic control unit 20, together with the first fan 9 or while the latter is switched off, in order, for example, to discharge a first air flow 120 from the first environment 100 (for example an environment to be air conditioned) to a second environment 200 (for example the external environment of the building, not shown, in which the fan coil unit 1 is installed), and at the same time to introduce into the first environment 100 a second air flow 130 (alone, or mixed with the air 110 emitted by the action of the first fan 9) coming from the second environment 200, exchanging heat between the first and the second air flow (as for example in the advantageous operating conditions illustrated in figures 39 or 40), or without heat exchange between them (as for example in the advantageous operating condition illustrated in figure 41).

The air exchange means can also be advantageously used, as for example in the advantageous operating condition illustrated in figures 42 and 43, to take a third air flow 140 from a third environment 300, for example a bathroom, and discharge said third air flow 140 into a fourth environment 400, for example the environment outside the building in which the fan coil unit 1 is installed, and at the same time to introduce into the first environment 100 a second air flow 130 coming from a second environment 200 (which may also be the environment outside the building in which the fan coil unit 1 is installed, or a different environment); it is underlined that in this case the first environment 100 and the third environment 300, although different from each other, are preferably in fluid communication with each other, so that the second air flow 130 entering the first environment can compensate the pressure reduction produced in the third environment 300 due to the extraction therefrom of the third air flow 140.

In advantageous embodiments, such as, for example, those illustrated in figures 19 to 43, wherein the fan coil unit comprises means for disinfecting the second air flow 130, such as, for example, a disinfection lamp 40, they can be activated, for example by the electronic control unit 20, to disinfect the second air flow 130, thereby ensuring that such second air flow 130 is introduced into the first environment 100 free from any pathogens.

When manual cleaning and disinfection of the fan coil unit 1 is required, it is sufficient, after removing any removable covering means, such as a protective casing 701 or the protective grille 703, and after disconnecting the electrical contacts between the fan coil unit 1 and the building's electrical installation, to remove the container 10 from the installation frame 600 (if provided), thereby automatically disconnecting the first male/female hydraulic connectors 7a, 7b from the second male/female hydraulic connectors 8a, 8b.

If no rapid hydraulic couplings are provided, the air/fluid heat exchanger 2 can be separated from the delivery pipe and the return pipe of the circuit for circulation of a heat transfer fluid by disconnecting, e.g. manually, the hydraulic coupling means connecting the air/fluid heat exchanger 2 to the delivery pipe and the return pipe.

Advantageously, the valves integrated into the hydraulic coupling means, if provided, prevent the heat transfer fluid from escaping from the heat exchanger and from the delivery and return pipes.

If the installation frame 600 is not provided, it is sufficient to disconnect, if advantageously provided, the first male/female hydraulic connectors 7a, 7b from the second male/female hydraulic connectors 8a, 8b fixed respectively to the delivery pipe and to the return pipe, and remove the container 10 from its installation place (for example a ceiling 700, a recess 500, a floor, a vertical wall), by removing the twelfth removable fixing means (for example screws) which fix such container 10 to the installation place.

Also in this case, if no rapid hydraulic couplings are provided, the air/fluid heat exchanger 2 can be separated from the delivery pipe and the return pipe of the circuit for circulation of a heat transfer fluid by disconnecting, e.g. manually, the hydraulic coupling means connecting the air/fluid heat exchanger 2 to the delivery pipe and the return pipe.

At this point, it is possible to remove one or more filters, not shown, applied to protect the first opening 11 and/or the second opening 12, in order to clean or replace them.

In advantageous embodiments, such as those illustrated in figures 1 to 18, wherein the fan coil unit 1 is not provided with the air exchange means, the cover 15 can be removed from the base 13 by removing the first removable fixing means (e.g. screws), and thus allowing access to the first fan 9 and to the air/fluid heat exchanger 2; by removing the covers 19a and 19b from the respective brackets 16a, 16b, and, if necessary, removing the second removable fixing means (e.g. screws), the air/fluid heat exchanger 2 (and with it the dispenser 25 in the advantageous case where this is provided, and fixed to the air/fluid heat exchanger 2) can be separated from the first fan 9 and from the base 13.

By removing the third removable fixing means (e.g. screws) it is then possible to remove the first fan 9 (and with it the air sanitization lamp 24, in the advantageous case where this is provided, and attached to the first fan 9) from the base 13.

The first and second half-shells comprising the base 13 may be separated from each other by removing the fourth removable fixing means (e.g. screws); in the advantageous case where the fourth removable fixing means coincide with the first removable fixing means for removably fixing the cover 15 to the base 13 and/or with the third removable fixing means for removably fixing the first fan 9 to the base 13, the fourth removable fixing means have already been removed for removing the cover 15 from the base 13 and/or for removing the first fan 9 from the base 13.

The electronic control unit 20 can be removed from the cover 15 (before or after removal of the latter from the base 13) by removing the respective removable sixth fixing means.

The various components of the fan coil unit that come into contact with air 110 (in particular the air/fluid heat exchanger 2, the first fan 9, the cover 15, the first half-shell 133 and the second half-shell 134) are therefore advantageously separable from each other very easily and quickly, and can therefore be washed and/or sanitized and/or disinfected individually very effectively.

The fan coil unit 1 can then be re-assembled and installed just as easily and quickly by repeating the steps described above in reverse order.

In advantageous embodiments, such as those illustrated in figures 19 to 43, wherein the fan coil unit 1 is provided with the air exchange means, after separation of the container 10 from the installation frame 600, if provided, or removal of the container 10 from its direct installation location (e.g. a ceiling 700, a recess 500, a floor, a vertical wall), if the installation frame 600 is not provided, the disconnection of the hydraulic coupling means connecting the air/fluid heat exchanger 2 to the delivery pipe and the return pipe (e.g. the first male/female hydraulic connectors 7a, 7b and the second male/female hydraulic connectors 8a, 8b), and the disconnection of the electrical connections between the fan coil unit 1 and the building's electrical installation, the fan coil unit 1 can be easily disassembled in order to be able to clean and/or sanitize and/or disinfect the individual components thereof.

In advantageous embodiments, such as those illustrated in figures 19 to 43, it is possible to remove the covering element 39 from the cover 15 by removing the respective tenth removable fixing means, and then to remove the cover 15 from the base 13 by removing the first removable fixing means (e.g. screws).

It should be noted that the covering element 39 can be removed from the cover 15 before or after the latter has been removed from the base 13.

In advantageous embodiments, such as, for example, those illustrated in figures 19 to 43, the electronic control unit 20 may be removed from the cover 15 (also before or after removal of the latter from the base 13) by removing the respective removable sixth fixing means.

At this point, the second fan 26 and the third fan 27 can be removed from the base 13 by removing the respective eighth removable fixing means.

By removing the covers 19a and 19b from the respective brackets 16a, 16b, and, if necessary, by removing the second removable fixing means (e.g. screws), it is possible to separate the air/fluid heat exchanger 2 (and with it the dispenser 25, in the advantageous case where this is provided, and fixed to the air/fluid heat exchanger 2) from the first fan 9 and from the base 13. By removing the third removable fixing means (e.g. screws) it is then possible to remove the first fan 9 (and with it the air sanitization lamp 24, in the advantageous case where this is provided, and attached to the first fan 9) from the base 13.

It is underlined that the first fan 9 and the air/fluid heat exchanger 2 can be removed from the base 13 before or after the removal of the second fan 26 and the third fan 27 therefrom.

At this point, the first half-shell 133 can be removed from the second half-shell 134 by removing the removable fixing means (e.g. screws), thereby making the air/air heat exchanger 30 accessible, which can then be removed from the second half-shell 134.

It is then possible to remove the closure element 143 from the second half-shell 134 by removing the ninth removable fixing means that fix such components to each other.

It is underlined that the removal of the closure element 143 from the second half-shell 134 may also be carried out at another time, even possibly before the removal of the cover 15 from the base 13.

The various components of the fan coil unit which come into contact with the air (in particular the air/fluid heat exchanger 2, the first fan 9, the cover 15, the covering element 39, the first half-shell 133 and the second half-shell 134, the second fan 26, the third fan 27, the air/air heat exchanger 30, the closing element 143) can therefore be very easily and quickly separated from each other and can therefore be washed and/or sanitized and/or disinfected individually in a very effective manner.

The fan coil unit 1 can then be re-assembled and installed just as easily and quickly by repeating the steps described above in reverse order.

It has thus been found that the fan coil unit according to the invention solves the above-mentioned task and purposes, as its structure allows for quick and easy disassembly of all its parts (heat exchanger, first fan, cover, first and second half-shells, etc.), which can then be cleaned and/or sanitized and/or disinfected individually, very effectively.

Furthermore, the disassembly, assembly and installation of the fan coil unit according to the invention is very easy and quick, thus reducing the downtime required for its cleaning and sanitization and/or disinfection compared to the known solutions mentioned.

Finally, it is clear that the fan coil unit thus conceived is susceptible to numerous modifications and variations, all of which are within the scope of the invention which is defined by the appended independent claim 1; moreover, all the details can be replaced by technically equivalent elements. In practice, the materials used, as well as the dimensions thereof, can be of any type according to the technical requirements.

## Claims

1. Fan coil unit (1) comprising:
- an air/fluid heat exchanger (2) removably connectable to a circuit for the circulation of a heat transfer fluid by hydraulic coupling means (7a, 7b, 8a, 8b),
- a first fan (9), configured to suck air (110) from a first environment (100), external to said fan coil unit (1), to make said air (110) to come into contact with said air/fluid heat exchanger (2), so that said air (110) exchanges heat with a heat transfer fluid circulating in said air/fluid heat exchanger (2), and to introduce again said air (110) into said first environment (100), at a temperature different from the one of entry;
- a container (10) which removably encloses said air/fluid heat exchanger (2) and said first fan (9), in which a first opening (11) and a second opening (12) are defined, configured to allow one the suction of said air (110) from said first environment (100) and its introduction into said container (10) by the action of said first fan (9), and the other the emission of said air (110) from the inside of said container (10) and its introduction into said external environment (100) by the action of said first fan (9),
wherein said container (10) comprises:
- a base (13), box-shaped, to which said air/fluid heat exchanger (2) and said first fan (9) are removably attached, and comprising said first opening (11), inside said base (13) a first conduit (14) being defined which fluidly connects said first opening (11) with said first fan (9),
- a cover (15), removably attached to said base (13) so as to enclose, together with the latter, said first fan (9) and said air/fluid heat exchanger (2), said cover (15) comprising said second opening (12)
**characterised in that**
said base (13) comprises a first half-shell (133) and a second half-shell (134), fixed to each other in a removable way, among which said first conduit (14) is defined.

2. Fan coil unit (1), as in claim 1, wherein said hydraulic coupling means are rapid hydraulic coupling means (7a, 7b, 8a, 8b).

3. Fan coil unit (1), as in claim 2, wherein said rapid hydraulic coupling means comprise two first male/female hydraulic connectors (7a, 7b), hydraulically connected one to an input end (3a) and one to an output end (3b) of a tube (3) of said air/fluid heat exchanger (2) suitable for the circulation of a heat transfer fluid, said first male/female hydraulic connectors (7a, 7b) being removably connectable respectively to two second male/female hydraulic connectors (8a, 8b), hydraulically connected one to a delivery pipe and one to a return pipe of a circuit for the circulation of a heat transfer fluid.

4. Fan coil unit (1), as in claim 1 or 2 or 3, wherein said hydraulic coupling means (7a, 7b, 8a, 8b) comprise integrated valves, such that when said hydraulic coupling means (7a, 7b, 8a, 8b) are disconnected, a liquid cannot escape from them.

5. Fan coil unit (1), as in one or more of the preceding claims, wherein said container (10) is shaped in such a way to allow the connection and separation of said air/fluid heat exchanger (2) from a circuit for the circulation of a heat transfer fluid by means of said hydraulic coupling means (7a, 7b, 8a, 8b), acting from the outside of said container (10).

6. Fan coil unit (1), as in one or more of the preceding claims, wherein said base (13) has an external surface (13a), facing, when said base (13) is attached to said cover (15), towards the latter, configured to house on it said air/fluid heat exchanger (2) and said first fan (9).

7. Fan coil unit (1), as in one or more of the preceding claims, comprising:
- means for sanitizing the condensate which forms on said air/fluid heat exchanger (2), suitable for disinfecting said condensate before it is discharged from said fan coil unit (1),
and/or
- means for sanitizing the air passing through said fan coil unit (1),
and/or
- means for the automatic washing and/or the automatic sanitization and/or the automatic disinfection of said air/fluid heat exchanger (2),
and/or
- means for the treatment of one or more components of the fan coil unit (1) and/or of the air passing through it with a disinfectant and/or medical substance.

8. Fan coil unit (1), as in one or more of the preceding claims, comprising means for regulating the humidity of said first environment (100), comprising valve means configured to allow the selective delivery of liquid on said air/fluid heat exchanger (2), wherein said fan coil unit (1) comprises an electronic control unit (20), by which said valve means are controlled, configured and/or programmed to control said valve means so as to deliver said liquid onto said air/fluid heat exchanger (2) when said first fan (9) is operating, so as to emit said liquid, in the form of droplets or steam, in said first environment and regulate its degree of humidity.

9. Fan coil unit (1), as in one or more of the preceding claims, comprising air exchange means configured for:
- sucking in said fan coil unit (1) a first air flow (120) from said first environment (100), making said first air flow (120) to pass through said fan coil unit (1), and letting said first air flow (120) out in a second environment (200), external to said fan coil unit (1), and distinct from said first environment (100) ;
- sucking in said fan coil unit (1) a second air flow (130) from said second environment (200), making said second air flow (130) to pass through said fan coil unit (1), and letting said second air flow (130) out in said first environment (100).

10. Fan coil unit (1), as in claim 9, wherein said air exchange means comprise:
- a second fan (26), configured to suck said first air flow (120) from said first environment (100), to make said first air flow (120) to pass through said fan coil unit (1), and to let said first air flow (120) out in said second environment (200);
- a third fan (27), configured to suck said second air flow (130) from said second environment (200), to make said second air flow (130) to pass through said fan coil (1), and to let said second air flow (130) out in said first environment (100),
wherein said second fan (26) and said third fan (27) are removably fixed to said base (13).

11. Fan coil unit (1), as in claim 10, wherein said air exchange means comprise an air/air heat exchanger (30), configured to allow the entry and exit of said first and second air flow, and let them exchange heat without mixing them, wherein said air/air heat exchanger (30) is removably attached to said base (13).

12. Fan coil unit (1), as in one or more of claims from 9 to 11, comprising disinfection means of said second air flow (130), configured to disinfect said second air flow (130) after its entry in said fan coil unit (1) and before its emission in said first environment (100).

13. Fan coil unit (1), as in one or more of the preceding claims, comprising an installation frame (600), to which said container (10) can be attached in a removable manner.

14. Fan coil unit (1), as in claim 13 when it depends on claim 2 or on a claim dependent on claim 2, wherein said installation frame (600) comprises part of said rapid hydraulic coupling means (7a, 7b, 8a, 8b), is hydraulically connectable to a circuit for the circulation of a heat transfer fluid, and is configured in such a way that the fixing of said container (10) to said installation frame (600) automatically causes the connection of said air/fluid heat exchanger (2) to said circuit for the circulation of a heat transfer fluid by means of said rapid hydraulic coupling means (7a, 7b, 8a, 8b) .

## Patentansprüche

1. Lüfterspuleneinheit (1), bestehend aus:
- einen Luft/Flüssigkeit-Wärmetauscher (2), der durch hydraulische Kupplungsmittel (7a, 7b, 8a, 8b) abnehmbar mit einem Kreislauf für die Zirkulation eines Wärmeträgerfluids verbunden werden kann,
- ein erstes Gebläse (9), das so konfiguriert ist, dass es Luft (110) aus einer ersten Umgebung (100) außerhalb der Lüfterspuleneinheit (1) ansaugt, um die Luft (110) mit dem Luft/Fluid-Wärmetauscher (2) in Kontakt zu bringen, so dass die Luft (110) Wärme mit einem Wärmeübertragungsfluid austauscht, das in dem Luft/Fluid-Wärmetauscher (2) zirkuliert, und um die Luft (110) wieder in die erste Umgebung (100) einzuführen, und zwar bei einer Temperatur, die sich von derjenigen des Eintritts unterscheidet;
- einen Behälter (10), der den Luft/Flüssigkeit-Wärmetauscher (2) und das erste Gebläse (9) abnehmbar umschließt, in dem eine erste Öffnung (11) und eine zweite Öffnung (12) definiert sind, die so konfiguriert sind, dass sie einerseits das Ansaugen der Luft (110) aus der ersten Umgebung (100) und ihre Einführung in den Behälter (10) durch die Wirkung des ersten Gebläses (9) und andererseits die Emission der Luft (110) aus dem Inneren des Behälters (10) und ihre Einführung in die äußere Umgebung (100) durch die Wirkung des ersten Gebläses (9) ermöglichen,
wobei der Behälter (10) Folgendes umfasst:
- eine kastenförmige Basis (13), an der der Luft/Fluid-Wärmetauscher (2) und das erste Gebläse (9) abnehmbar befestigt sind und die die erste Öffnung (11) aufweist, wobei innerhalb der Basis (13) eine erste Leitung (14) definiert ist, die die erste Öffnung (11) mit dem ersten Gebläse (9) fluidmäßig verbindet,
- eine Abdeckung (15), die abnehmbar an der Basis (13) befestigt ist, um zusammen mit dieser den ersten Ventilator (9) und den Luft/Flüssigkeits-Wärmetauscher (2) zu umschließen, wobei die Abdeckung (15) die zweite Öffnung (12) aufweist **dadurch gekennzeichnet** ist
die Basis (13) eine erste Halbschale (133) und eine zweite Halbschale (134) umfasst, die abnehmbar aneinander befestigt sind und zwischen denen die erste Leitung (14) definiert ist.

2. Lüfterspuleneinheit (1) nach Anspruch 1, wobei die hydraulischen Kupplungsmittel hydraulische Schnellkupplungsmittel (7a, 7b, 8a, 8b) sind.

3. Lüfterspuleneinheit (1) nach Anspruch 2, wobei die hydraulischen Schnellkupplungsmittel zwei erste hydraulische Stecker/Buchsen-Verbinder (7a, 7b) umfassen, von denen einer mit einem Eingangsende (3a) und einer mit einem Ausgangsende (3b) eines Rohrs (3) des Luft/Fluid-Wärmetauschers (2), das für die Zirkulation eines Wärmeübertragungsfluids geeignet ist, hydraulisch verbunden ist, wobei die ersten männlichen/weiblichen Hydraulikverbinder (7a, 7b) jeweils mit zwei zweiten männlichen/weiblichen Hydraulikverbindern (8a, 8b) lösbar verbunden werden können, von denen einer mit einer Zufuhrleitung und einer mit einer Rücklaufleitung eines Kreislaufs für die Zirkulation eines Wärmeübertragungsfluids hydraulisch verbunden ist.

4. Lüfterspuleneinheit (1) nach Anspruch 1 oder 2 oder 3, wobei die hydraulischen Kupplungsmittel (7a, 7b, 8a, 8b) integrierte Ventile umfassen, so dass, wenn die hydraulischen Kupplungsmittel (7a, 7b, 8a, 8b) getrennt sind, keine Flüssigkeit aus ihnen entweichen kann.

5. Lüfterspuleneinheit (1) nach einem oder mehreren der vorhergehenden Ansprüche, wobei der Behälter (10) so geformt ist, dass er die Verbindung und Trennung des Luft/Fluid-Wärmetauschers (2) von einem Kreislauf für die Zirkulation eines Wärmeübertragungsfluids mittels der hydraulischen Kupplungsmittel (7a, 7b, 8a, 8b) ermöglicht, die von der Außenseite des Behälters (10) wirken.

6. Lüfterspuleneinheit (1) nach einem oder mehreren der vorhergehenden Ansprüche, wobei der Sockel (13) eine Außenfläche (13a) aufweist, die, wenn der Sockel (13) an der Abdeckung (15) befestigt ist, zu letzterer weist und so konfiguriert ist, dass sie den Luft/Flüssigkeits-Wärmetauscher aufnimmt (2) und dem ersten Ventilator (9).

7. Lüfterspuleneinheit (1) nach einem oder mehreren der vorhergehenden Ansprüche, umfassend:
- Mittel zur Desinfektion des Kondensats, das sich auf dem Luft/Flüssigkeit-Wärmetauscher (2) bildet, die geeignet sind, das Kondensat zu desinfizieren, bevor es von der Lüfterspuleneinheit (1) abgeleitet wird, und/oder
- Mittel zur Desinfektion der durch die Lüfterspuleneinheit (1) strömenden Luft,
und/oder
- Mittel zum automatischen Waschen und/oder zur automatischen Desinfektion und/oder zur automatischen Desinfektion des Luft/Flüssigkeits-Wärmetauschers (2),
und/oder
- Mittel zur Behandlung eines oder mehrerer Bauteile des Gebläsekonvektors (1) und/oder der durch ihn strömenden Luft mit einem Desinfektionsmittel und/oder einer medizinischen Substanz.

8. Lüfterspuleneinheit (1), wie in einem oder mehreren der vorhergehenden Ansprüche, mit einer Einrichtung zum Regulieren der Feuchtigkeit der ersten Umgebung (100), mit einer Ventileinrichtung, die so konfiguriert ist, dass sie die selektive Abgabe von Flüssigkeit an den Luft/Flüssigkeit-Wärmetauscher (2) ermöglicht, wobei die Lüfterspuleneinheit (1) eine elektronische Steuereinheit (20) umfasst, durch die die Ventilmittel gesteuert, konfiguriert und/oder programmiert werden, um die Ventilmittel so zu steuern, dass sie die Flüssigkeit an den Luft/Flüssigkeits-Wärmetauscher (2) abgeben, wenn das erste Gebläse (9) in Betrieb ist, um die Flüssigkeit in Form von Tröpfchen oder Dampf in die erste Umgebung abzugeben und ihren Feuchtigkeitsgrad zu regulieren.

9. Lüfterspuleneinheit (1) nach einem oder mehreren der vorhergehenden Ansprüche, die Luftaustauschmittel umfasst, die für Folgendes konfiguriert sind:
- Ansaugen eines ersten Luftstroms (120) aus der ersten Umgebung (100) in die Lüfterspuleneinheit (1), Veranlassen des ersten Luftstroms (120), durch die Lüfterspuleneinheit (1) zu strömen, und Auslassen des ersten Luftstroms (120) in eine zweite Umgebung (200), die sich außerhalb der Lüfterspuleneinheit (1) befindet und sich von der ersten Umgebung (100) unterscheidet;
- Ansaugen eines zweiten Luftstroms (130) aus der zweiten Umgebung (200) in die Lüfterspuleneinheit (1), Durchleiten des zweiten Luftstroms (130) durch die Lüfterspuleneinheit (1) und Auslassen des zweiten Luftstroms (130) in die erste Umgebung (100).

10. Lüfterspuleneinheit (1) nach Anspruch 9, wobei die Luftaustauschmittel Folgendes umfassen:
- ein zweites Gebläse (26), das so konfiguriert ist, dass es den ersten Luftstrom (120) aus der ersten Umgebung (100) ansaugt, den ersten Luftstrom (120) dazu bringt, durch die Lüfterspuleneinheit (1) zu strömen, und den ersten Luftstrom (120) in die zweite Umgebung (200) entlässt;
- ein drittes Gebläse (27), das so konfiguriert ist, dass es den zweiten Luftstrom (130) aus der zweiten Umgebung (200) ansaugt, den zweiten Luftstrom (130) dazu bringt, durch die Gebläsespule (1) zu strömen, und den zweiten Luftstrom (130) in die erste Umgebung (100) entlässt,
wobei das zweite Gebläse (26) und das dritte Gebläse (27) abnehmbar an der Basis (13) befestigt sind.

11. Lüfterspuleneinheit (1) nach Anspruch 10, wobei die Luftaustauschmittel einen Luft/Luft-Wärmetauscher (30) umfassen, der so konfiguriert ist, dass er den Eintritt und den Austritt des ersten und des zweiten Luftstroms ermöglicht und sie Wärme austauschen lässt, ohne sie zu vermischen, wobei der Luft/Luft-Wärmetauscher (30) abnehmbar an der Basis (13) angebracht ist.

12. Lüfterspuleneinheit (1) nach einem oder mehreren der Ansprüche 9 bis 11, umfassend Desinfektionsmittel für den zweiten Luftstrom (130), die so konfiguriert sind, dass sie den zweiten Luftstrom (130) nach seinem Eintritt in die Lüfterspuleneinheit (1) und vor seinem Austritt in die erste Umgebung (100) desinfizieren.

13. Lüfterspuleneinheit (1) nach einem oder mehreren der vorhergehenden Ansprüche, mit einem Einbaurahmen (600), an dem der Behälter (10) abnehmbar befestigt werden kann.

14. Lüfterspuleneinheit (1) nach Anspruch 13, wenn er von Anspruch 2 abhängt, oder nach einem von Anspruch 2 abhängigen Anspruch, wobei der Einbaurahmen (600) einen Teil der hydraulischen Schnellkupplungsmittel (7a, 7b, 8a, 8b) umfasst, hydraulisch mit einem Kreislauf für die Zirkulation eines Wärmeträgerfluids verbindbar ist, und so ausgebildet ist, dass die Befestigung des Behälters (10) an dem Einbaurahmen (600) automatisch den Anschluss des Luft/Fluid-Wärmetauschers (2) an den Kreislauf für die Zirkulation eines Wärmeträgerfluids mittels der hydraulischen Schnellkupplungsmittel (7a, 7b, 8a, 8b) bewirkt.

## Revendications

1. Ventilo-convecteur (1) comprenant:
- un échangeur de chaleur air/fluide (2) pouvant être raccordé de manière amovible à un circuit de circulation d'un fluide caloporteur par des moyens de couplage hydraulique (7a, 7b, 8a, 8b),
- un premier ventilateur (9), configuré pour aspirer de l'air (110) d'un premier environnement (100), extérieur audit ventilo-convecteur (1), pour mettre ledit air (110) en contact avec ledit échangeur de chaleur air/fluide (2), de sorte que ledit air (110) échange de la chaleur avec un fluide caloporteur circulant dans ledit échangeur de chaleur air/fluide (2), et pour introduire à nouveau ledit air (110) dans ledit premier environnement (100), à une température différente de celle d'entrée;
- un conteneur (10) qui renferme de manière amovible ledit échangeur de chaleur air/fluide (2) et ledit premier ventilateur (9), dans lequel sont définies une première ouverture (11) et une seconde ouverture (12), configurées pour permettre l'une l'aspiration dudit air (110) dudit premier environnement (100) et son introduction dans ledit conteneur (10) par l'action dudit premier ventilateur (9), et l'autre l'émission dudit air (110) depuis l'intérieur dudit conteneur (10) et son introduction dans ledit environnement extérieur (100) par l'action dudit premier ventilateur (9),
dans lequel ledit récipient (10) comprend:
- une base (13), en forme de boîte, à laquelle ledit échangeur de chaleur air/fluide (2) et ledit premier ventilateur (9) sont fixés de manière amovible, et comprenant ladite première ouverture (11), à l'intérieur de ladite base (13) est défini un premier conduit (14) qui relie de manière fluide ladite première ouverture (11) audit premier ventilateur (9),
- un couvercle (15), fixé de manière amovible à ladite base (13) de façon à enfermer, avec cette dernière, ledit premier ventilateur (9) et ledit échangeur de chaleur air/fluide (2), ledit couvercle (15) comprenant ladite seconde ouverture (12) **caractérisé en ce que**
ladite base (13) comprend une première demi-coquille (133) et une seconde demi-coquille (134), fixées l'une à l'autre de manière amovible, entre lesquelles est défini ledit premier conduit (14).

2. Ventilo-convecteur (1) selon la revendication 1, dans lequel les moyens de couplage hydraulique sont des moyens de couplage hydraulique rapide (7a, 7b, 8a, 8b).

3. Ventilo-convecteur (1), selon la revendication 2, dans lequel lesdits moyens de couplage hydraulique rapide comprennent deux premiers connecteurs hydrauliques mâle/femelle (7a, 7b), raccordés hydrauliquement l'un à une extrémité d'entrée (3a) et l'autre à une extrémité de sortie (3b) d'un tube (3) dudit échangeur de chaleur air/fluide (2) apte à la circulation d'un fluide caloporteur, lesdits premiers connecteurs hydrauliques mâle/femelle (7a, 7b) étant amovibles respectivement à deux seconds connecteurs hydrauliques mâle/femelle (8a, 8b), raccordés hydrauliquement l'un à un tuyau de refoulement et l'autre à un tuyau de retour d'un circuit de circulation d'un fluide caloporteur.

4. Ventilo-convecteur (1) selon la revendication 1, 2 ou 3, dans lequel les moyens de couplage hydraulique (7a, 7b, 8a, 8b) comprennent des vannes intégrées, de sorte que lorsque les moyens de couplage hydraulique (7a, 7b, 8a, 8b) sont déconnectés, un liquide ne peut pas s'en échapper.

5. Ventilo-convecteur (1), tel que décrit dans l'une ou plusieurs des revendications précédentes, dans lequel ledit conteneur (10) est façonné de manière à permettre la connexion et la séparation dudit échangeur de chaleur air/fluide (2) d'un circuit de circulation d'un fluide caloporteur au moyen desdits moyens de couplage hydraulique (7a, 7b, 8a, 8b), agissant depuis l'extérieur dudit conteneur (10).

6. Ventilo-convecteur (1), selon une ou plusieurs des revendications précédentes, dans lequel ladite base (13) présente une surface externe (13a), orientée, lorsque ladite base (13) est fixée audit couvercle (15), vers ce dernier, configurée pour y loger ledit échangeur de chaleur air/fluide (2) et le premier ventilateur (9).

7. Ventilo-convecteur (1), tel que décrit dans l'une ou plusieurs des revendications précédentes, comprenant:
- des moyens d'assainissement du condensat qui se forme sur ledit échangeur de chaleur air/fluide (2), aptes à désinfecter ledit condensat avant qu'il ne soit évacué dudit ventilo-convecteur (1),
et/ou
- des moyens d'assainissement de l'air traversant ledit ventilo-convecteur (1),
et/ou
- des moyens pour le lavage automatique et/ou l'assainissement automatique et/ou la désinfection automatique dudit échangeur de chaleur air/fluide (2), et/ou
- des moyens de traitement d'un ou de plusieurs composants du ventilo-convecteur (1) et/ou de l'air qui le traverse avec un désinfectant et/ou une substance médicale.

8. Ventilo-convecteur (1), tel que décrit dans l'une ou plusieurs des revendications précédentes, comprenant des moyens de régulation de l'humidité dudit premier environnement (100), comprenant des moyens de vanne configurés pour permettre la distribution sélective de liquide sur ledit échangeur de chaleur air/fluide (2), dans lequel ledit ventilo-convecteur (1) comprend une unité de commande électronique (20), par lequel lesdits moyens de vanne sont commandés, configurés et/ou programmés pour commander lesdits moyens de vanne de manière à délivrer ledit liquide sur ledit échangeur de chaleur air/fluide (2) lorsque ledit premier ventilateur (9) fonctionne, de manière à émettre ledit liquide, sous forme de gouttelettes ou de vapeur, dans ledit premier environnement et à en réguler le degré d'humidité.

9. Ventilo-convecteur (1), selon l'une ou plusieurs des revendications précédentes, comprenant des moyens d'échange d'air configurés pour:
- aspirer dans ledit ventilo-convecteur (1) un premier flux d'air (120) provenant dudit premier environnement (100), faire passer ledit premier flux d'air (120) à travers ledit ventilo-convecteur (1), et laisser sortir ledit premier flux d'air (120) dans un second environnement (200), extérieur audit ventilo-convecteur (1), et distinct dudit premier environnement (100);
- aspirer dans ledit ventilo-convecteur (1) un second flux d'air (130) provenant dudit second environnement (200), faire passer ledit second flux d'air (130) à travers ledit ventilo-convecteur (1), et laisser sortir ledit second flux d'air (130) dans ledit premier environnement (100).

10. Ventilo-convecteur (1), selon la revendication 9, dans lequel les moyens d'échange d'air comprennent:
- un second ventilateur (26), configuré pour aspirer ledit premier flux d'air (120) depuis ledit premier environnement (100), pour faire passer ledit premier flux d'air (120) à travers ledit ventilo-convecteur (1), et pour laisser sortir ledit premier flux d'air (120) dans ledit second environnement (200);
- un troisième ventilateur (27), configuré pour aspirer ledit deuxième flux d'air (130) depuis ledit deuxième environnement (200), pour faire passer ledit deuxième flux d'air (130) à travers ledit ventilo-convecteur (1), et pour laisser sortir ledit deuxième flux d'air (130) dans ledit premier environnement (100),
dans lequel ledit deuxième ventilateur (26) et ledit troisième ventilateur (27) sont fixés de manière amovible à ladite base (13).

11. Ventilo-convecteur (1) selon la revendication 10, dans lequel les moyens d'échange d'air comprennent un échangeur de chaleur air/air (30), configuré pour permettre l'entrée et la sortie de ces premier et second flux d'air, et pour leur permettre d'échanger de la chaleur sans les mélanger, dans lequel l'échangeur de chaleur air/air (30) est fixé de manière amovible à la base (13).

12. Ventilo-convecteur (1), tel que dans une ou plusieurs des revendications de 9 à 11, comprenant un moyen de désinfection dudit second flux d'air (130), configuré pour désinfecter ledit second flux d'air (130) après son entrée dans ledit ventilo-convecteur (1) et avant son émission dans ledit premier environnement (100).

13. Ventilo-convecteur (1), tel que décrit dans l'une ou plusieurs des revendications précédentes, comprenant un cadre d'installation (600), auquel ledit conteneur (10) peut être fixé de manière amovible.

14. Ventilo-convecteur (1), selon la revendication 13 lorsqu'elle dépend de la revendication 2 ou d'une revendication dépendant de la revendication 2, dans lequel ledit cadre d'installation (600) comprend une partie desdits moyens d'accouplement hydraulique rapide (7a, 7b, 8a, 8b), est raccordable hydrauliquement à un circuit de circulation d'un fluide caloporteur, et est configuré de telle sorte que la fixation dudit conteneur (10) audit cadre d'installation (600) entraîne automatiquement la connexion dudit échangeur de chaleur air/fluide (2) audit circuit de circulation d'un fluide caloporteur au moyen desdits moyens de couplage hydraulique rapide (7a, 7b, 8a, 8b).
